(19)

Europäisches
Patentamt
European
Patent Office
Office européen
des brevets

(11) **EP 3 880 413 B1**

(12) **EUROPEAN PATENT SPECIFICATION**

(45) Date of publication and mention
of the grant of the patent:
**04.10.2023 Bulletin 2023/40**

(21) Application number: **20765106.8**

(22) Date of filing: **29.07.2020**

(51) International Patent Classification (IPC):
**B25J 9/16** *(2006.01)* **G05D 1/02** *(2020.01)*

(52) Cooperative Patent Classification (CPC):
**B25J 9/1666;** G05B 2219/40298;
G05B 2219/40425; G05B 2219/40455;
G05B 2219/40471; G05B 2219/40513;
G05B 2219/40517

(86) International application number:
**PCT/JP2020/030103**

(87) International publication number:
**WO 2021/065196 (08.04.2021 Gazette 2021/14)**

(54) **METHOD AND SYSTEM FOR TRAJECTORY OPTIMIZATION FOR VEHICLES WITH GEOMETRIC CONSTRAINTS**

VERFAHREN UND SYSTEM ZUR BAHNOPTIMIERUNG FÜR FAHRZEUGE MIT GEOMETRISCHEN EINSCHRÄNKUNGEN

PROCÉDÉ ET SYSTÈME D'OPTIMISATION DE TRAJECTOIRE POUR DES VÉHICULES AVEC CONTRAINTES GÉOMÉTRIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.10.2019 US 201916591655**

(43) Date of publication of application:
**22.09.2021 Bulletin 2021/38**

(73) Proprietor: **Mitsubishi Electric Corporation
Tokyo 100-8310 (JP)**

(72) Inventors:
• **RAGHUNATHAN, Arvind
Cambridge, Massachusetts 02139-1955 (US)**
• **JHA, Devesh
Cambridge, Massachusetts 02139-1955 (US)**
• **ROMERES, Diego
Cambridge, Massachusetts 02139 (US)**

(74) Representative: **Pfenning, Meinig & Partner mbB
Patent- und Rechtsanwälte
An der Frauenkirche 20
01067 Dresden (DE)**

(56) References cited:
**US-B1- 8 700 307**

• **PERDEREAU V ET AL: "Real-time control of redundant robotic manipulators for mobile obstacle avoidance", ROBOTICS AND AUTONOMOUS SYSTEMS, ELSEVIER BV, AMSTERDAM, NL, vol. 41, no. 1, 31 October 2002 (2002-10-31), pages 41-59, XP004382424, ISSN: 0921-8890, DOI: 10.1016/S0921-8890(02)00274-9**
• **Sezimária F.P Saramago ET AL: "Optimal trajectory planning of robot manipulators in the presence of moving obstacles", Mechanism and Machine Theory, 1 January 2000 (2000-01-01), pages 1079-1094, XP055492865, DOI: 10.1016/S0094-114X(99)00062-2 Retrieved from the Internet: URL:https://www.sciencedirect.com/science/article/pii/S0094114X99000622/pdfft?md5=17 133e66421691244ddcadf8b995e416&pid=1-s2.0-S0094114X99000622-main.pdf [retrieved on 2020-11-12]**

**(Cont. next page)**

- E. GILBERT ET AL: "Distance functions and their application to robot path planning in the presence of obstacles", IEEE JOURNAL ON ROBOTICS AND AUTOMATION, vol. 1, no. 1, 1 January 1985 (1985-01-01) , pages 21-30, XP055750081, USA ISSN: 0882-4967, DOI: 10.1109/JRA.1985.1087003
- CASCIO J ET AL: "Smooth proximity computation for collision-free optimal control of multiple robotic manipulators", INTELLIGENT ROBOTS AND SYSTEMS, 2009. IROS 2009. IEEE/RSJ INTERNATIONAL CONFERENCE ON, IEEE, PISCATAWAY, NJ, USA, 10 October 2009 (2009-10-10), pages 2452-2457, XP031580742, ISBN: 978-1-4244-3803-7
- XIAOJING ZHANG ET AL: "Optimization-Based Collision Avoidance", ARXIV.ORG, CORNELL UNIVERSITY LIBRARY, 201 OLIN LIBRARY CORNELL UNIVERSITY ITHACA, NY 14853, 9 November 2017 (2017-11-09), XP081325673,

**Description**

[Technical Field]

The present disclosure relates to methods and systems for trajectory optimization for dynamical systems, and more particularly to vehicles with geometric constraints.

[Background Art]

Robotic systems can be configured to control a robotic device including a robotic arm (also called manipulator). For example, the robotic system can include a controller that receives an input signal, and generates a control signal, wherein the robotic arm may provide a feedback signal to the controller.

The robotic systems can include a robotic arm containing an end effector or a gripper, that is used for applications including grasping, picking up or moving objects. For instance, the robotic device can be used to complete a task or a series of tasks. Such tasks can include moving objects, such that the robotic systems can direct a robotic arm to pick up objects based on given knowledge of where objects are located within the environment. In general, the control inputs for a manipulator arm are the motor torques that the robot has to apply at each of the joints in order to move to a desired pose from an initial pose.

The planning of an optimal trajectory of a manipulator includes avoiding obstacles while minimizing time in the field of robotics is difficult. This is because the requirement of avoiding obstacles leads to many problems with conventional methods including: (i) circumscribing of the obstacles and robot arm by a set of convex objects that overestimate the physical extent and (ii)a set of nonsmooth, non-convex constraints. The overestimation of the physical extent can lead to conservative trajectories or even infeasible trajectories even though a feasible trajectory might exist. The optimization of continuous-time dynamical systems for the set of nonsmooth constraint is a challenging problem to solve. Conventional trajectory planning algorithms use nonlinear programming algorithms which assume that the constraint is at least once continuously differentiable. Hence, a judicious formulation of the obstacle avoidance constraint is required in order for the formulation to be amenable to nonlinear programming algorithms.

Several conventional methods optimize time and effort during the path planning step by associating geometry, e.g., curvature of the trajectory with energy consumption. Some methods consider the energy-efficient path planning problem in terms of friction and gravity, but assume the manipulator moves at a constant speed. Results on the energy optimal motion planning are limited, and some methods focus on time-optimality and smoothness of the trajectory, see, e.g., U.S. Patent 6,216,058. All of these techniques rely on the optimization algorithms to find trajectories that avoid the obstacle since such trajectories are of high cost or effort. However, since the optimization problem is non-convex there are bound to exist multiple local minima but the optimization algorithms are not guaranteed to find the global minimum. As a consequence, there is no guarantee that the solution returned by such algorithms indeed avoids the obstacle.

The nonsmooth, non-convex constraints due to obstacle avoidance need to be enforced during trajectory generation and optimization. Several conventional methods formulate the trajectory planning with obstacle avoidance as an optimization problem. For example, the method described in U.S. Patent 7,248,952 formulates the trajectory planning as a mixed integer linear programming problem. However, these methods fail to consider the geometry of the robotic device and assume that the robot is a point mass. For example, if the entire arm of the robot is a point mass then different orientations of the arm are not represented. As a result, the point mass representation is a gross simplification and can lead to conservative trajectories.

Accordingly, there is a need for optimization of trajectory of a manipulator avoiding at least one obstacle, wherein the optimization is subject to spatial smooth, non-convex constraints due to the geometry of the obstacle, the geometry of the manipulator arm while respecting the dynamics of the manipulator.

The following publication contains further teachings on trajectory planning and obstacle avoidance, inter alia based on modelling obstacles by means of superquadratic surface functions:

V. Perdereau et al, "Real-time control of redundant robotic manipulators for mobile obstacle avoidance", Robotics and Autonomous Systems, vol. 41, no. 1, pages 41 - 59 (31 October 2002)

The following publication teaches a method for reformulating non-differentiable collision avoidance constraints into smooth nonlinear constraints using strong duality of convex optimization. The method can be used in generic navigation and trajectory planning tasks X ZHANG et al., "Optimization-Based Collision Avoidance", ARXIV.ORG, Cornell University Library, Ithaca, NY (9 November 2017)

[Summary of Invention]

The invention is defined in the appended independent claims. The present disclosure relates to methods and systems for trajectory optimization for dynamical systems, and more particularly to vehicles with geometric constraints.

Some embodiments of the present disclosure include a trajectory optimization technique(s) for dynamical systems with nonlinear constraints, such as geometric constraints for rigid body motion that are continuously differentiable, which allows for continuous time collision avoidance. The geometric constraints are the set of constraints imposed on the motion of a robotic system for collision avoidance due to the geometry of the obstacle as well as the robot. Also, realized from experimentation is that dynamically feasible trajectories can be generated for robotic systems like manipulators, end effectors and grippers. Some beneficial aspects, among many beneficial aspects realized, is that embodiments of the present disclosure can generate continuous-time collision free dynamic trajectories for rigid bodies without explicitly needing a collision checking/avoidance module or giving an initial feasible solution.

Motion planning for a manipulator is a recurring component in many of the experiments conducted prior to identifying the present embodiments of the disclosure. For example, some motion planning experiments conducted were for a manipulator to reach a goal state from a starting state by decomposing the full problem in two steps: kinematic planning and trajectory tracking. However, what was learned from this experimentation is that decoupling the problem into two steps automatically restricted a quality of the solution that one can obtain in terms of optimality. In at least one experiment, it was observed that when this problem was solved simultaneously, an optimization algorithm was forced to find a solution which minimized the effort, while respecting all the constraints active on the robotic system.

As mentioned above, the optimization of continuous-time dynamical systems for a set of nonsmooth constraints is a challenging problem to solve. The reason can be that some requirements of avoiding obstacles leads to many problems as is experienced with conventional methods. At least one realization of the present disclosure is that overestimation of the physical extent of the robot arm and obstacles should be minimized to the extent possible. One of the embodiments of the present disclosure provides for overestimation of the obstacle using a strictly convex body and a convex hull description of the robot arm. This minimizes or eliminates the overestimation of the physical extent of the robot arm. The obstacle avoidance constraint is formulated as the minimum distance between two convex bodies. Such a constraint can be nonsmooth and difficult to solve. Another key realization of the present disclosure is that the obstacle avoidance must be formulated as constraint in the optimization with sufficient smoothness and in a manner that can be solved efficiently. Such formulation ensures that any feasible trajectory will avoid the obstacle and the smoothness of the algorithm allow to employ a conventional nonlinear programming algorithm. Further, any local minima of the formulation satisfy to avoid obstacles, thereby avoiding the need for obtaining the global minimum.

Some aspects also learned from experimentation is that trajectory optimization is a procedure of generating a sequence of state and inputs to optimize a desired objective function while respecting all the constraints for a system. One experimentation included a trajectory planning approach for trajectory optimization that configured the trajectory planning to use a decomposition of the problem into kinematic planning, which was followed by dynamic planning. The kinematic planning was set up to arrange a path in a configuration space of the robot while checking for possible collisions with obstacles present in the environment. However, several tests during experimentation often resulted in infeasible trajectories or trajectories which were sub-optimal and later realized to be infeasible for the dynamics. What was gained or learned, was that because the kinematic planning module did not consider the dynamics, this resulted in the planning module that was not being aware of the dynamics and the control saturation limits of the system. This resulted in trajectories that saturated the control limits of the system or resulted in dynamically non-smooth (i.e., the robot often experienced a very high acceleration during movement) which proved to be undesirable. Thus, a realization of the present disclosure is the incorporation of geometric constraints as well as state and input constraints to automatically generate collision-free, optimal trajectories for a robotic system is highly desirable. This realization additionally allowed for trajectory optimization without the requirement of collision checking between the robot and the obstacles, as it is enforced as a constraint during optimization.

Some embodiments of the disclosure are based on the realization derived from experimentation that most trajectory optimization problems in the presence of state and control constraints can be solved using a non-linear optimization technique. However, the geometric constraints imposed due to the movement of the manipulator arm in the presence of the obstacles in the environment result in non-convex, non-differentiable constraints as the minimum function is, in general, mathematically non-differentiable. In order to avoid collisions with obstacles, an optimization algorithm needs to ensure that the minimum distance of each of the links from all obstacles is always positive during the motion of the links. Since all the non-linear optimization techniques use the gradient information of the all the constraints, the non-differentiability of the geometric constraint makes it infeasible to be used with most of the non-linear optimization techniques

Some embodiments of the present disclosure are based on the realization also derived from experimentation that using a parameterization trick for the coordinate of the individual links of the manipulator allows to write the geometric constraints as a first-order differentiable function, thus allowing computation of gradient of the geometric constraint. This realization allows to minimize or eliminate the overestimation of the physical extent of the robotic arm and allows to incorporate the geometric constraints for rigid bodies in the nonlinear program for trajectory optimization. As a result of this modification, it is possible to incorporate geometric constraints in the non-linear optimization solver and solve for the trajectory optimization with an off-the-shelf nonlinear optimization software.

Some non-claimed embodiments of the present disclosure use a manipulator system in the presence of static obstacles by formulating for the geometric constraints as a first-order differentiable function. Based on experimentation, the simulated tests generated feasible and optimal trajectories for the system under the provided constraints. Some results from these tests where that there was no collision checking done outside of the optimization algorithm. Also, that the proposed formulation allowed for continuous-time collision avoidance within the nonlinear program instance. Thus, at least one non-claimed key aspect, among many key aspects, is the formulation of incorporating geometric constraints during trajectory optimization for robotic systems using the first-order differentiability of the geometric constraints for the nonlinear optimization problem.

Accordingly, based on the above experimental approaches, and the above realizations, the formulation for trajectory optimization incorporates state, input as well as geometric constraints for rigid bodies. Which was learned allows us to incorporate continuous time collision checking in the optimization problem and thus generate trajectories that are not only feasible with respect to collision avoidance but more importantly optimal with respect to the cost function.

According to some features of the embodiments of the present disclosure as described herein may be used in the aerospace industry, nonlinear control systems and process engineering, while the actually claimed embodiment is defined in the independent claims. Also, some features of the embodiments of the present disclosure can be used with a material-handling robot with multiple end-effectors suitable for applications in semiconductor wafer processing systems, while the actually claimed embodiment is defined in the independent claims. For example, the above operations may be utilized to pick/place a wafer or substrate from/to an offset station. A sequence of a pick operation with one end-effector, followed by a place operation with an other end-effector, which may be used to quickly exchange wafers/substrates at an offset station (rapid exchange operation). The robot drive unit may include one or more vertical lift mechanisms to control a vertical elevation of the robot arm, which may be used to access stations at different elevations, compensate for the vertical distance between the end-effectors of the robot arm, and facilitate material pick/place operations. Contemplated is that the robot device can utilize motor-driven ball screws, or any other suitable actuation mechanism, including, but not limited to, lead screws, linear motors, linkage mechanisms, scissor mechanisms, hydraulic actuators, pneumatic actuators and their combinations. Noted is that with two more robot arms, the configuration can include an upper arm and lower arm, configured with a location that is one of a same plane or different plane, as the other arm.

According to a non-claimed embodiment of the present disclosure, a computing system including a processor and an accessible memory. Wherein the computing system is configured to receive inputs including sensor data, robot operation and dynamics (ROD) data, a multi-link dynamics (MLD) model, a nonlinear optimization (NLO) program and an objective function. Determine trajectories including a path with a starting pose and an ending pose over a sequence of time intervals while satisfying dynamic constraints and geometric constraints on a robot arm, the robot arm is connected to a robot drive having motors for moving the robot arm. Determine the dynamic constraints based on dynamics of each link from the ROD data. Determine the geometric constraints as a first-order differentiable function by generating a coordinate grid of an environment from the sensor data, to determine Cartesian coordinates of at least one obstacle and end-points of each link. Use the MLD model to formulate the NLO program for the robot arm, the NLO program uses as inputs the starting and ending pose, the dynamic and geometric constraints, to optimize the objective function of the trajectories while satisfying the dynamic and geometric constraints and robot arm operating constraints, for each time interval in the sequence of time intervals, so that the trajectories move the robot end-effector starting pose and the ending pose. Control the motors of the robot drive to move the robot arm based upon the optimized trajectories obtained from the NLO program.

According to another non-claimed embodiment of the present disclosure, a method for determining trajectories including a path and corresponding control inputs associated with a starting pose and an ending pose. Wherein the path to be traversed is by a robotic device over a sequence of time intervals, while satisfying dynamic constraints and geometric constraints on the robotic device. The robotic device includes a robot arm having multiple links connected to a robot drive having motors for moving the robot arm. The method comprising determining the dynamic constraints based on dynamics of each link that includes different masses, geometry and moment of inertia tensor from dynamics data stored in a memory. Determine the geometric constraints as a first-order differentiable function by generating a coordinate grid of the environment from sensor data stored in the memory, to determine Cartesian coordinates of at least one obstacle and end-points of each link. Using a multi-link dynamics model to formulate a nonlinear optimization (NLO) program for the robot arm. The NLO program uses as inputs the starting and ending pose, the dynamic and geometric constraints, to optimize an objective function of the trajectories while satisfying the dynamic and geometric constraints and robot arm operating constraints, for each time interval in the sequence of time intervals, so that the trajectories move the robot end-effector starting pose and the ending pose. Control the motors of the robot drive to move the robot arm based upon the optimized trajectories obtained from the NLO program.

Another non-claimed embodiment of the present disclosure, a non-transitory computer-readable medium encoded with executable instructions that, when executed, cause one or more data processing systems to receive inputs including sensor data, robot operation and dynamics (ROD) data, a multi-link dynamic (MLD) model, a nonlinear optimization (NLO) program and an objective function. Determine trajectories including a path with a starting pose and an ending pose over a sequence of time intervals while satisfying dynamic constraints and geometric constraints on a robot arm. The robot arm is connected to a robot drive having motors for moving the robot arm via a controller. Determine the dynamic constraints based on dynamics of each link from the ROD data. Determine the geometric constraints as a first-order differentiable function by generating a coordinate grid of an environment from the sensor data, to determine Cartesian coordinates of at least one obstacle and end-points of each link. Use the MLD model to formulate the NLO program for the robot arm. The NLO program uses as inputs the starting and ending pose, the dynamic and geometric constraints, to optimize the objective function of the trajectories while satisfying the dynamic and geometric constraints and robot arm operating constraints, for each time interval in the sequence of time intervals, so that the trajectories move the robot end-effector starting pose and the ending pose. Control the motors of the robot drive to move the robot arm based upon the optimized trajectories obtained from the NLO program.

Another non-claimed embodiment of the present disclosure, a robotic system for determining trajectories including a path and corresponding control inputs associated with a starting pose and an ending pose. The path is to be traversed by a robotic device over a sequence of time intervals, while satisfying dynamic constraints and geometric constraints on the robotic device. Wherein the robotic device includes a robot arm with multiple links connected to a robot drive having motors for moving the robot arm, and an accessible memory. The memory includes sensor data, robot operational and dynamics (ROD) data, a multi-link dynamics (MLD) model, a non-linear optimization (NLO) program and an objective function. The robotic system comprising a process is configured to determine the dynamic constraints based on dynamics of each link that includes different masses, geometry and moment of inertia tensor from the ROD data. Determine the geometric constraints as a first-order differentiable function by generating a coordinate grid of the environment from the sensor data, to determine Cartesian coordinates of at least one obstacle and end-points of each link. Use the MLD model to formulate the NLO program for the robot arm. The NLO program uses as inputs the starting and ending pose, the dynamic and geometric constraints, to optimize an objective function of the trajectories while satisfying the dynamic and geometric constraints and robot arm operating constraints, for each time interval in the sequence of time intervals, so that the trajectories move the robot end-effector starting pose and the ending pose. Control the motors of the robot drive to move the robot arm based upon the optimized trajectories obtained from the NLO program.

The presently disclosed embodiments will be further explained with reference to the attached drawings. The drawings shown are not necessarily to scale, with emphasis instead generally being placed upon illustrating the principles of the presently disclosed embodiments.

[Brief Description of Drawings]

[Fig. 1A]

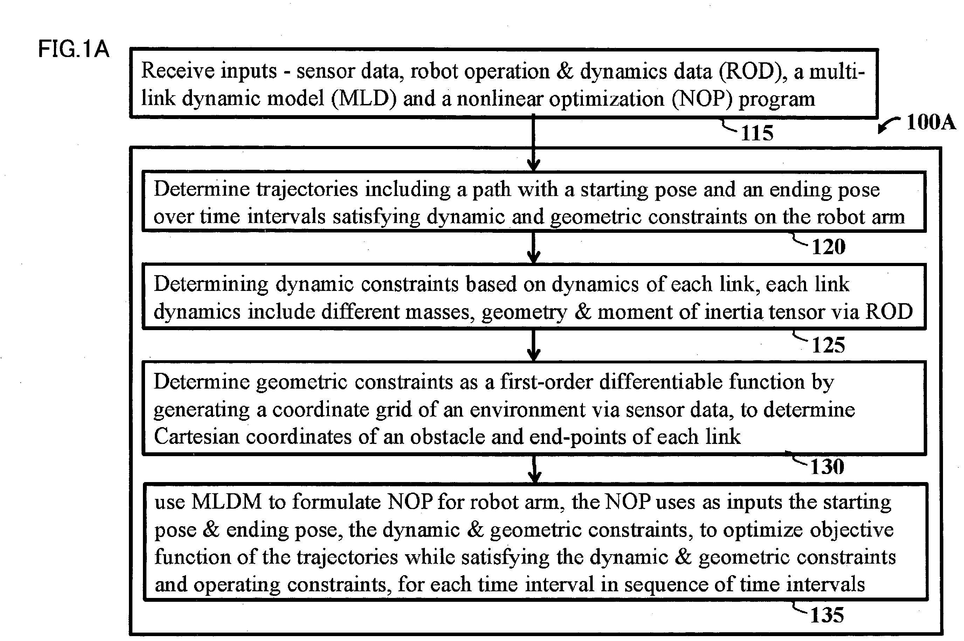

FIG. 1A is a flow diagram illustrating some method steps of a method associated with a robot device, according to a non-claimed embodiment of the present disclosure.
[Fig. 1B]

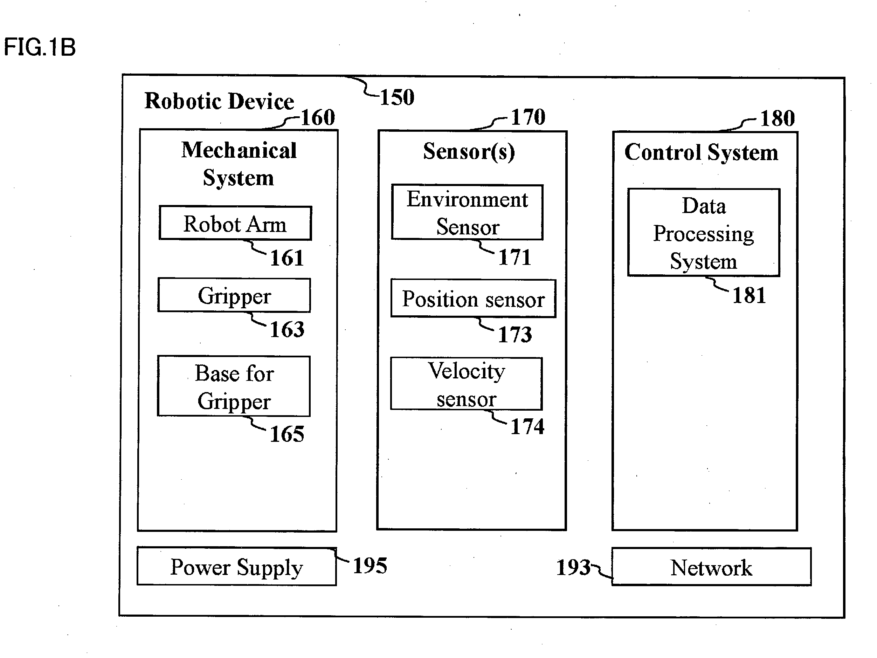

FIG. 1B is a block diagram illustrating some components used for implementing some methods associated with a robot device, according to some non-claimed embodiments of the present disclosure.
[Fig. 1C]

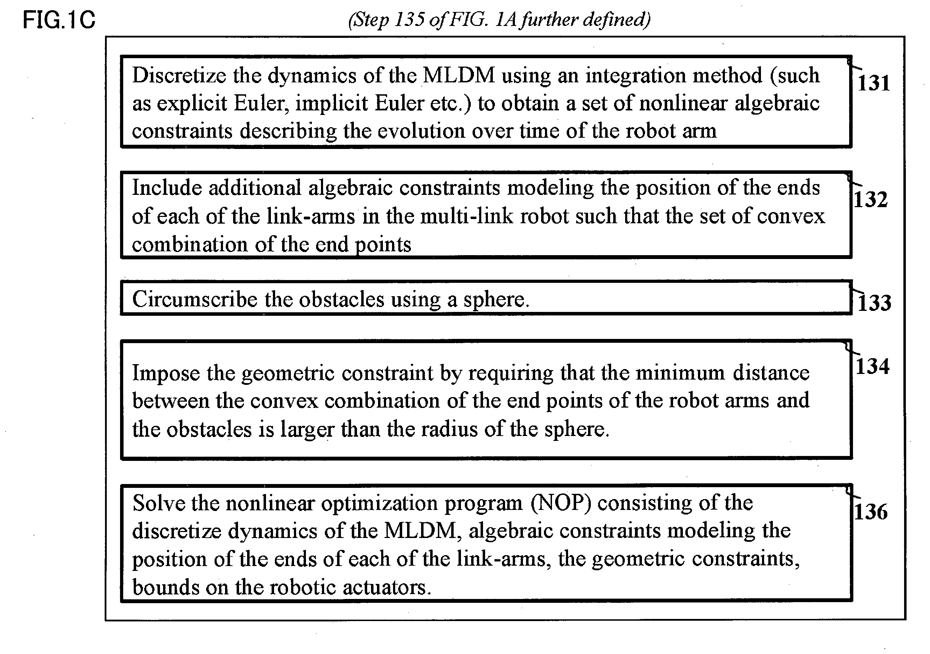

FIG. 1C is a block diagram illustrating some steps using the multi-link dynamic (MLD) model to formulate the nonlinear optimization (NOP) program for robot arm, according to some non-claimed embodiments of the present disclosure.
[Fig. 1D]

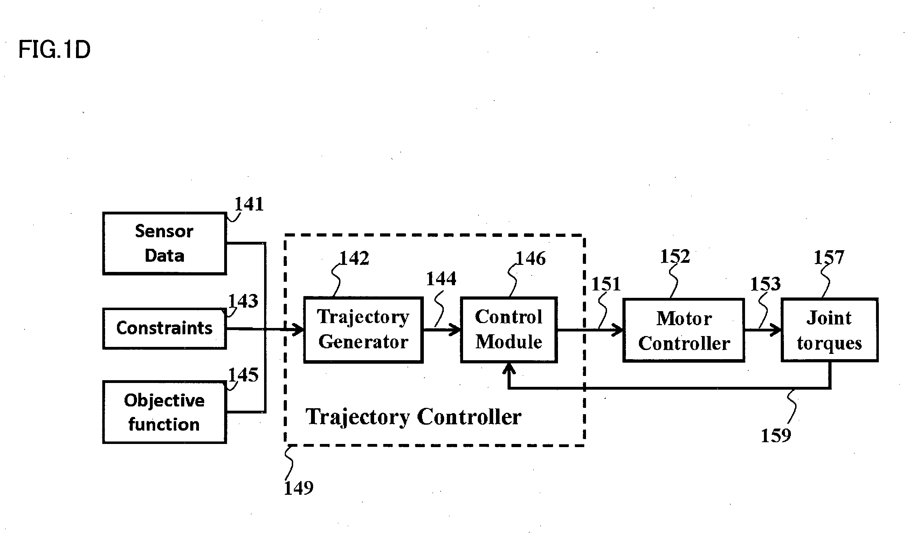

FIG. 1D is a flow diagram illustrating some steps used for implementing some methods associated with a robot device, according to some non-claimed embodiments of the present disclosure.
[Fig. 2A]

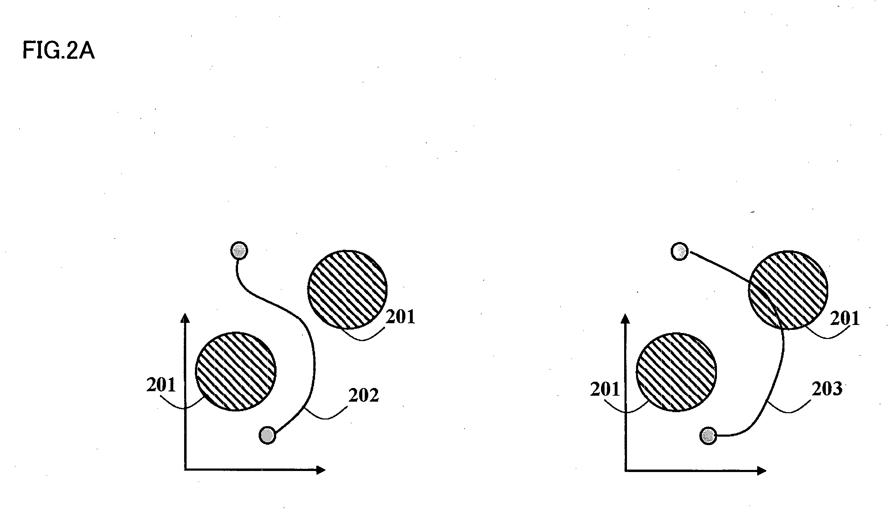

FIG. 2A is a scematic illustrating some steps of a method having a path that avoids objects, according to some non-claimed embodiment of the present disclosure.
[Fig. 2B]

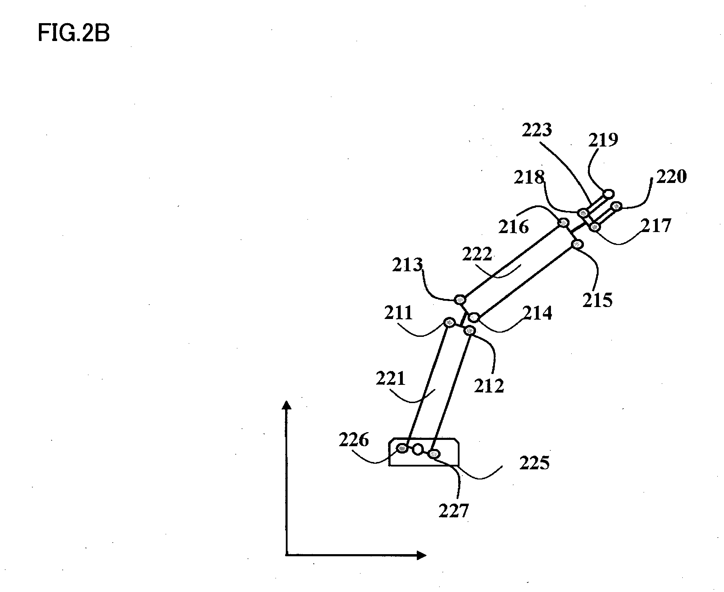

FIG. 2B is a scematic illustrating some steps of a method with a gripper, according to some non-claimed embodiment of the present disclosure.
[Fig. 3]

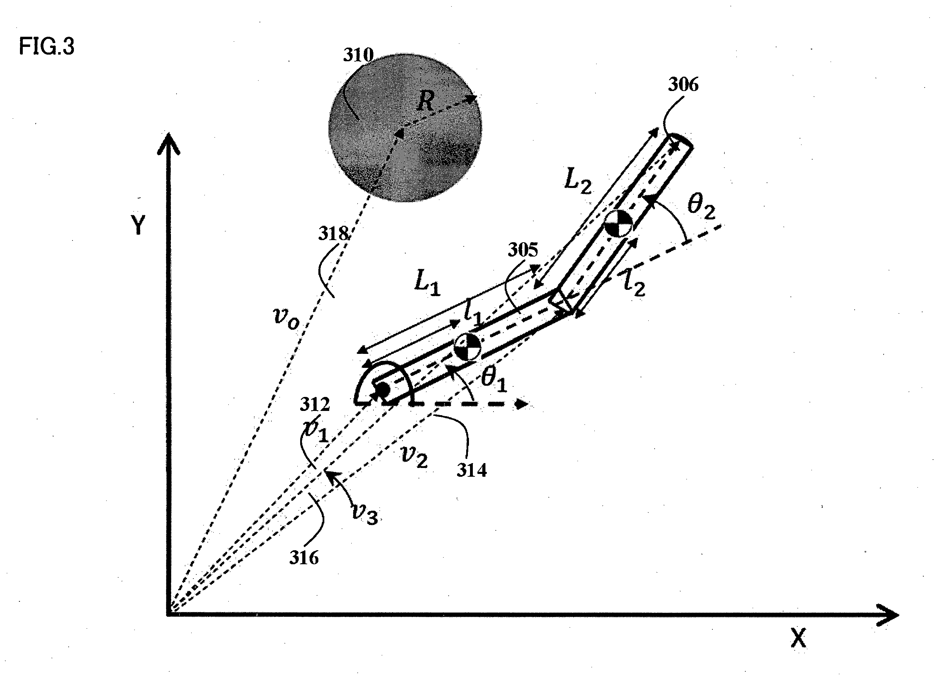

FIG. 3 is a scematic illustrating a two link planar manipulator with a circular obstacle in the coordinate reference frame, according to some non-claimed embodiment of the present disclosure.
[Fig. 4]

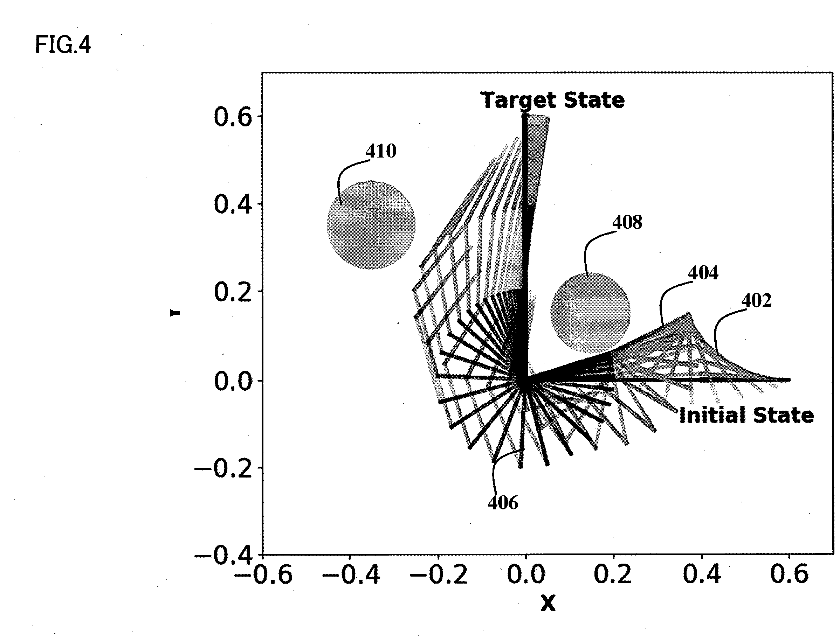

FIG. 4 is a scematic illustrating a solution obtained by the solver proposed in the paper for a planar three (3) DoF manipulator in the presence of an obstacle, an initial position of the manipulator end-effector is (0.6, 0) and a target position is (0, 0.6), according to some non-claimed embodiment of the present disclosure.
[Fig. 5A]

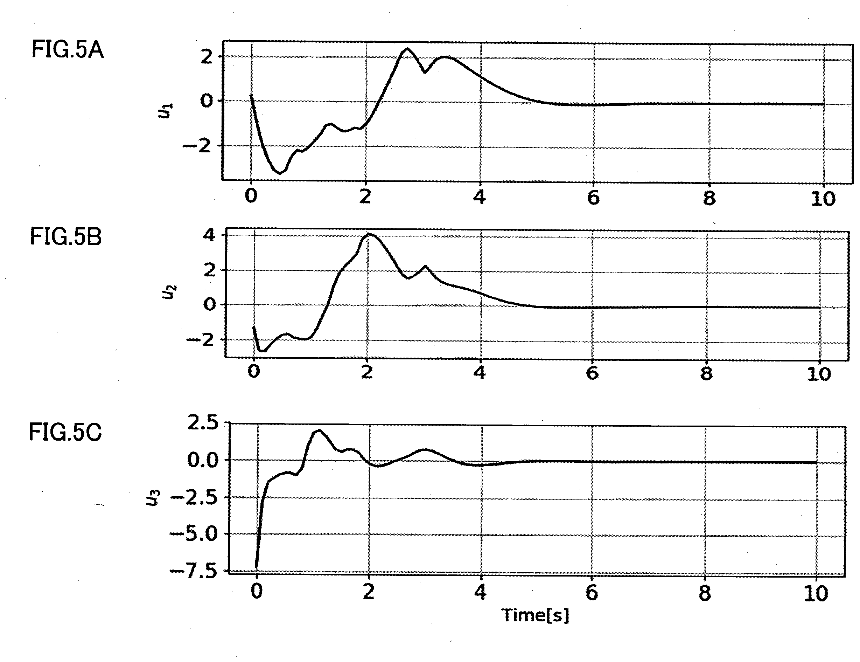

FIG. 5A is a graph illustrating optimal control obtained for the 3 DoF manipulator system, according to some non-claimed embodiment of the present disclosure.
[Fig. 5B]
FIG. 5B is a graph illustrating optimal control obtained for the 3 DoF manipulator system, according to some non-claimed embodiment of the present disclosure.
[Fig. 5C]
FIG. 5C is a graph illustrating optimal control obtained for the 3 DoF manipulator system, according to some non-claimed embodiment of the present disclosure.
[Fig. 6A]

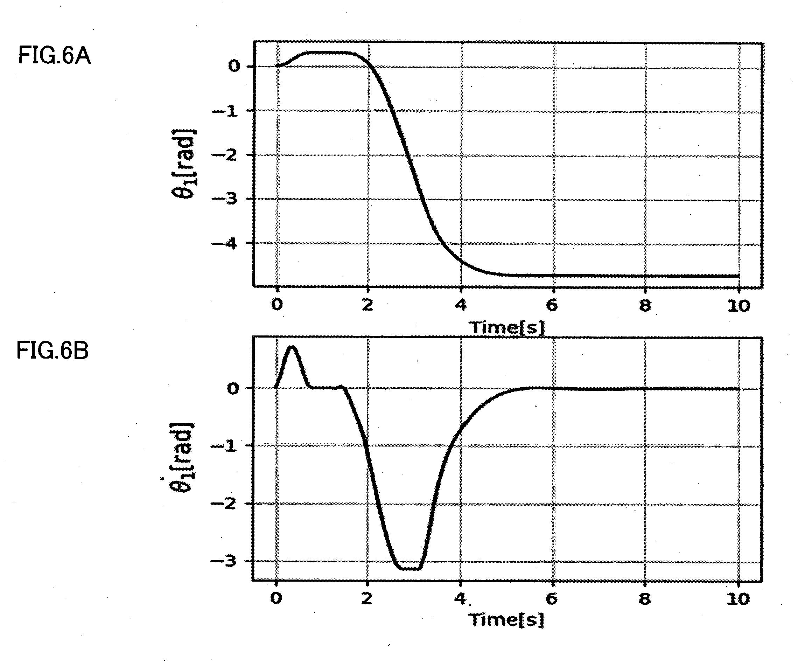

FIG. 6A is a graph illustrating state trajectories obtained for the 3 DoF manipulator system, according to some non-claimed embodiment of the present disclosure.
[Fig. 6B]
FIG. 6B is a graph illustrating state trajectories obtained for the 3 DoF manipulator system, according to some non-claimed embodiment of the present disclosure.
[Fig. 6C]

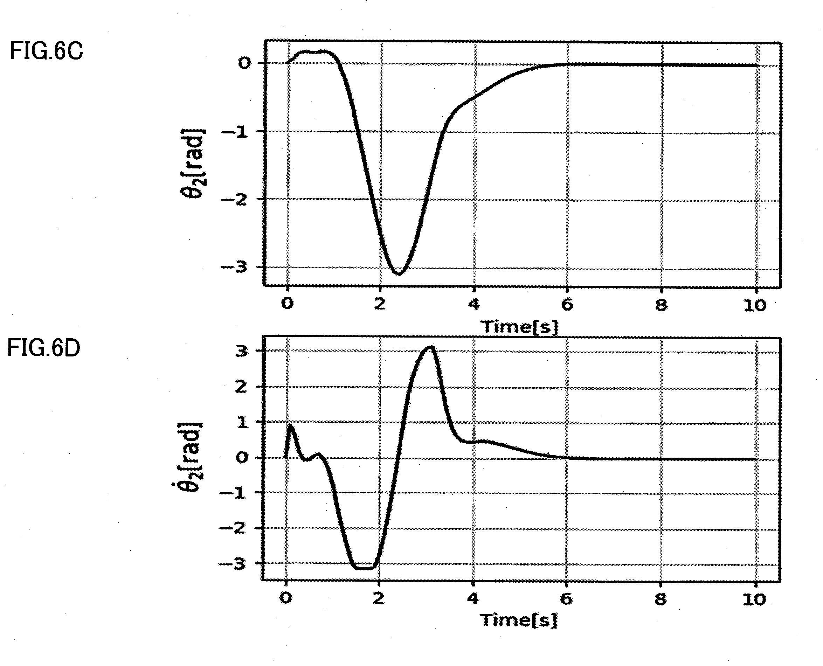

FIG. 6C is a graph illustrating state trajectories obtained for the 3 DoF manipulator system, according to some non-claimed embodiment of the present disclosure.
[Fig. 6D]
FIG. 6D is a graph illustrating state trajectories obtained for the 3 DoF manipulator system, according to some non-claimed embodiment of the present disclosure.
[Fig. 6E]

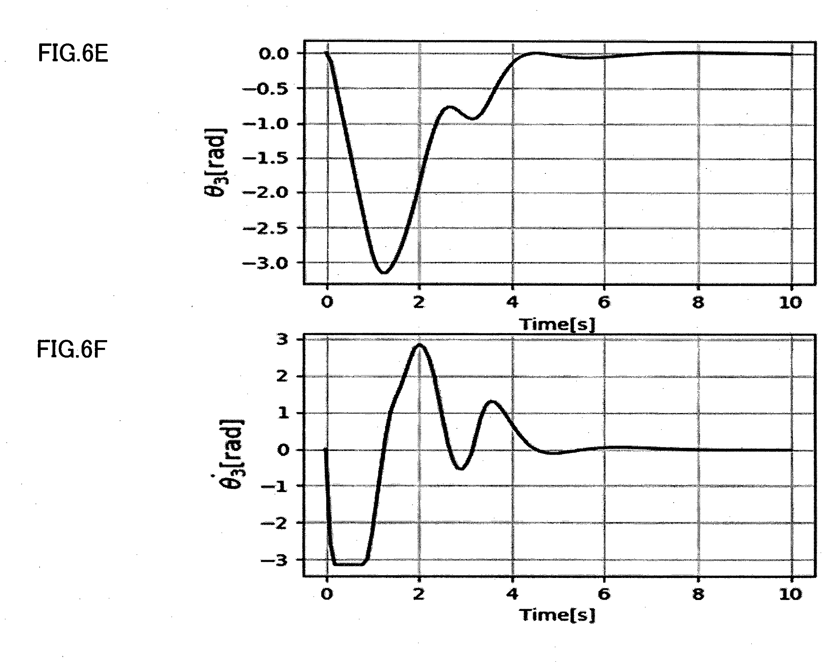

FIG. 6E is a graph illustrating state trajectories obtained for the 3 DoF manipulator system, according to some non-claimed embodiment of the present disclosure.
[Fig. 6F]
FIG. 6F is a graph illustrating state trajectories obtained for the 3 DoF manipulator system, according to some non-claimed embodiment of the present disclosure.
[Fig. 7A]

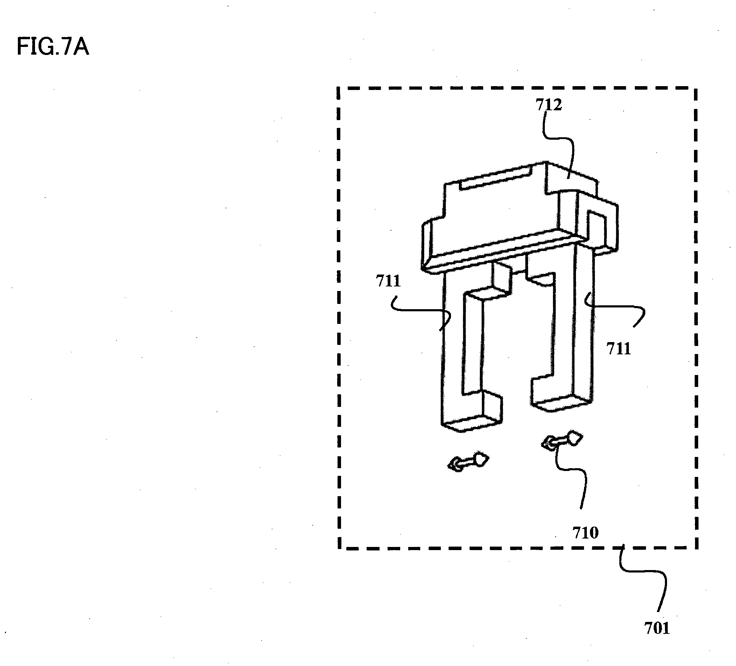

FIG. 7A is a schematic illustrating a type of robot device including a robot arm, according to some non-claimed embodiment of the present disclosure.
[Fig. 7B]

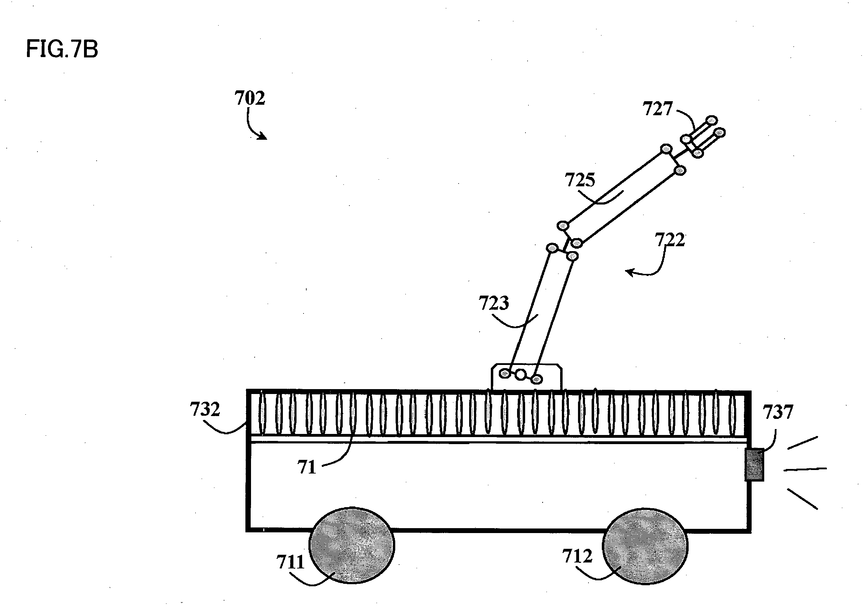

FIG. 7B is a schematic illustrating a type of a robot device including a robot arm, according to some non-claimed embodiment of the present disclosure.
[Fig. 8]

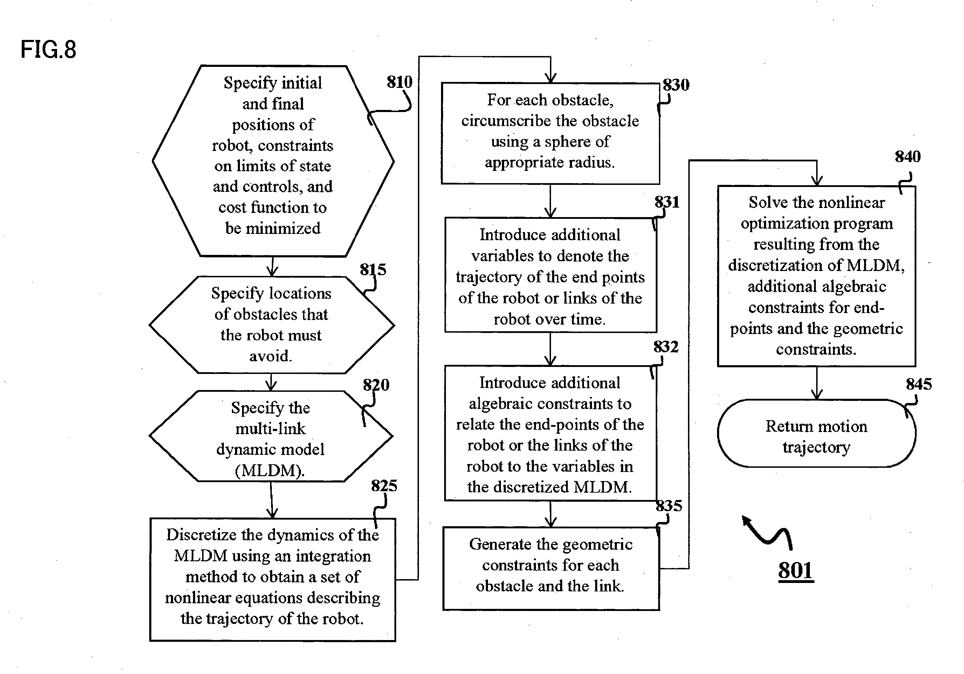

FIG. 8 is a flow diagram illustrating some steps used to implement a method, according to some non-claimed embodiments of the present disclosure.
[Fig. 9A]

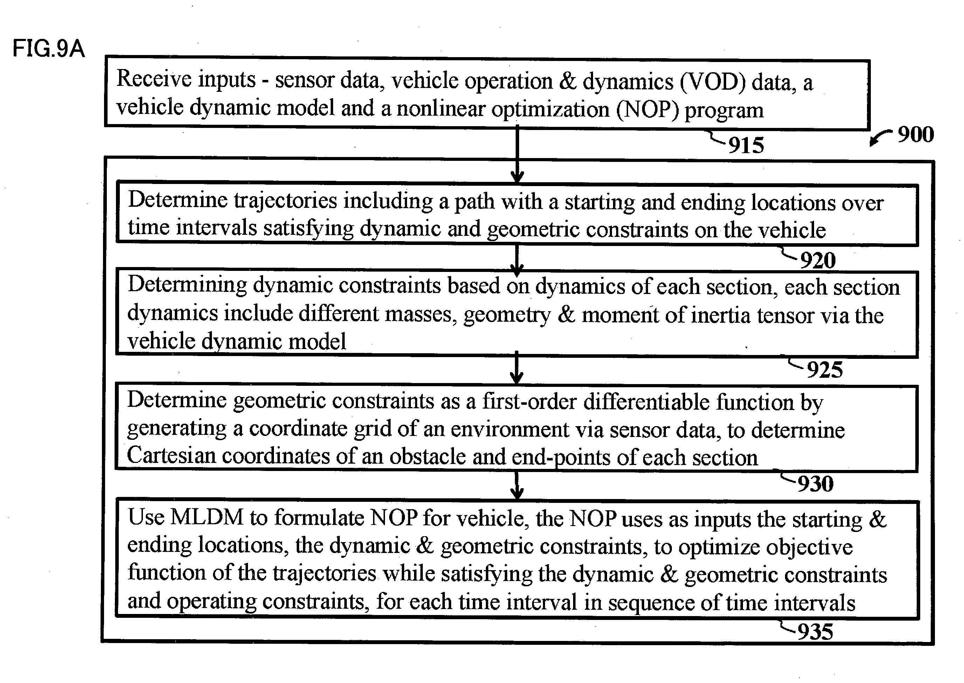

FIG. 9A is a flow diagram illustrating some method steps of a method associated with a vehicle, according to an embodiment of the present disclosure.
[Fig. 9B]

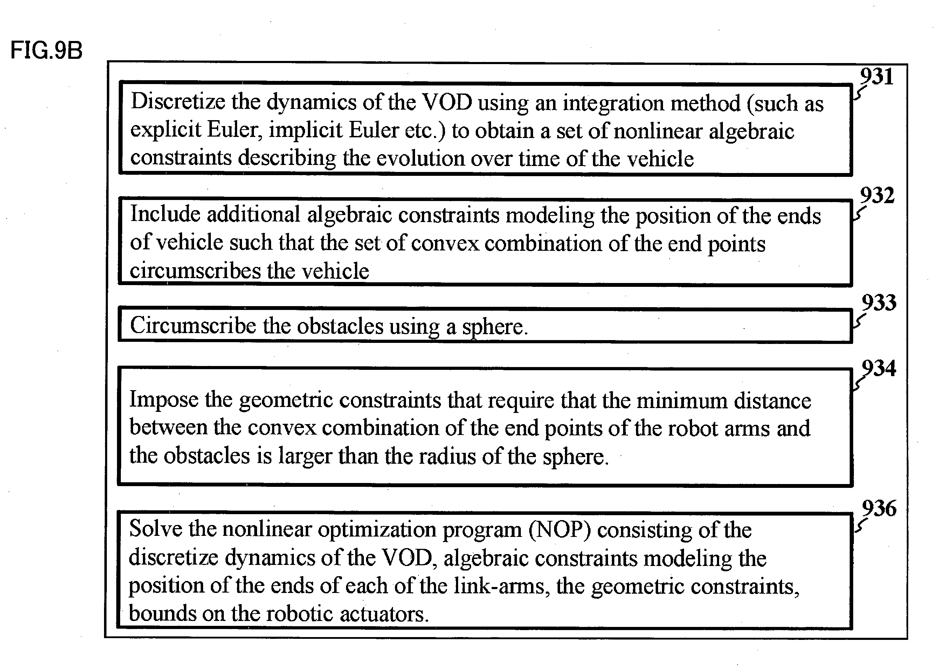

FIG. 9B is a flow diagram illustrating some steps used for implementing step 935 of FIG. 9A associated with a vehicle, according to some embodiments of the present disclosure.
[Fig. 10A]

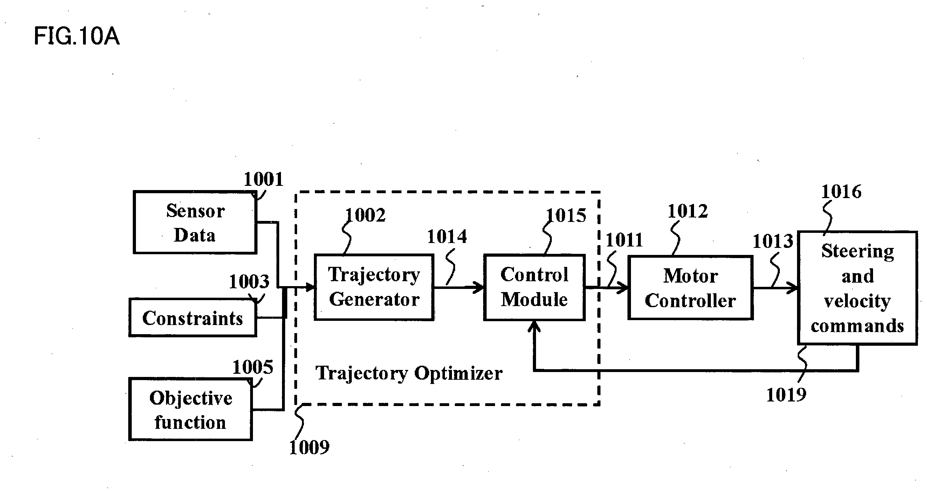

FIG. 10A is a scematic illustrating some steps used for implementing a method associated with a vehicle, according to some embodiments of the present disclosure.
[Fig. 10B]

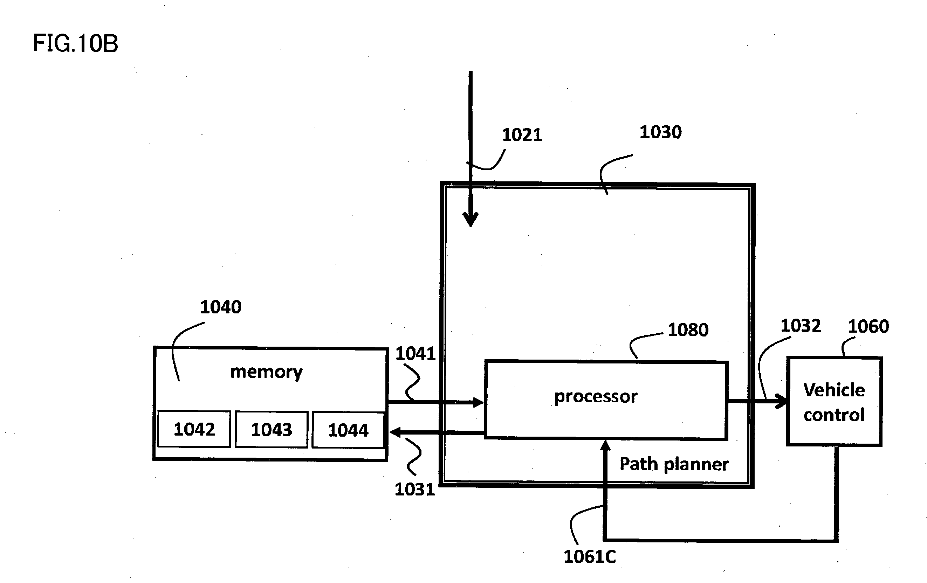

FIG. 10B is a block diagram illustrating some components used for a motion path-planning system for a vehicle, according to some embodiments of the present disclosure.
[Fig. 11]

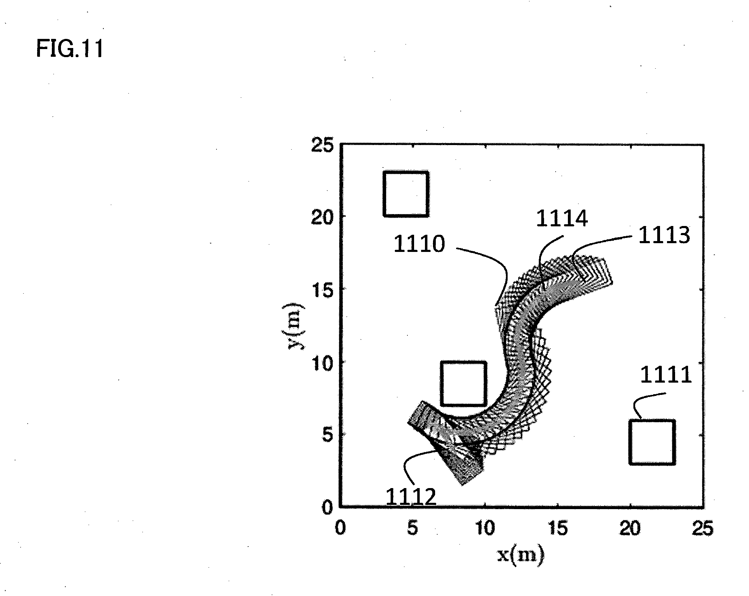

FIG. 11 is a scematic illustrating some steps of a method having a path that avoids objects for a vehicle, according to some embodiment of the present disclosure.
[Fig. 12]

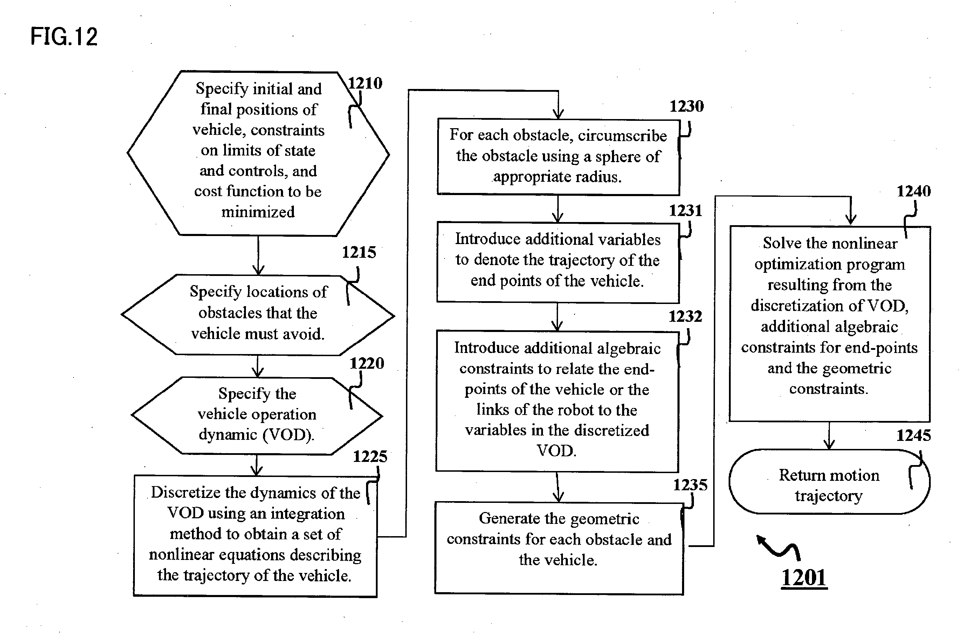

FIG. 12 is a flow diagram illustrating some steps used to implement a method for a vehicle, according to some embodiments of the present disclosure.
[Fig. 13]

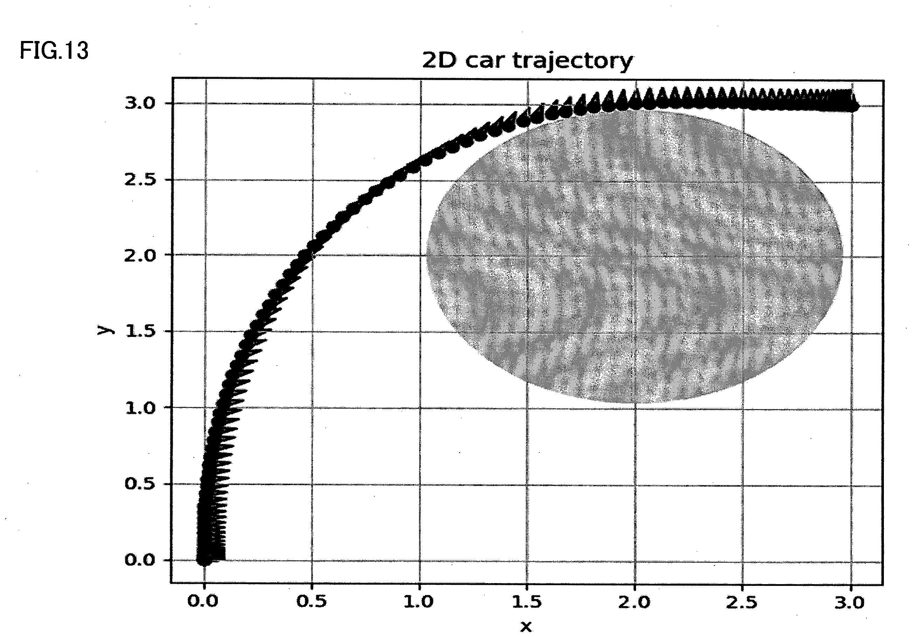

FIG. 13 is a graph diagram illustrating an optimal 2D vehicle trajectory using a method, according to some embodiments of the present disclosure.

[Fig. 14A]

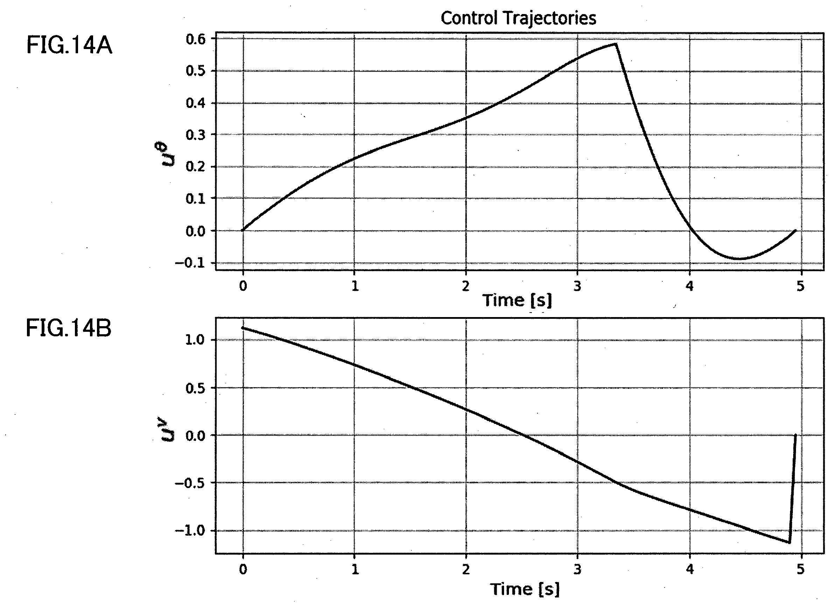

FIG. 14A is a graph diagram illustrating an optimal 2D vehicle input trajectory using a method, according to some embodiments of the present disclosure.
[Fig. 14B]
FIG. 14B is a graph diagram illustrating an optimal 2D vehicle input trajectory using a method, according to some embodiments of the present disclosure.
[Fig. 15A]

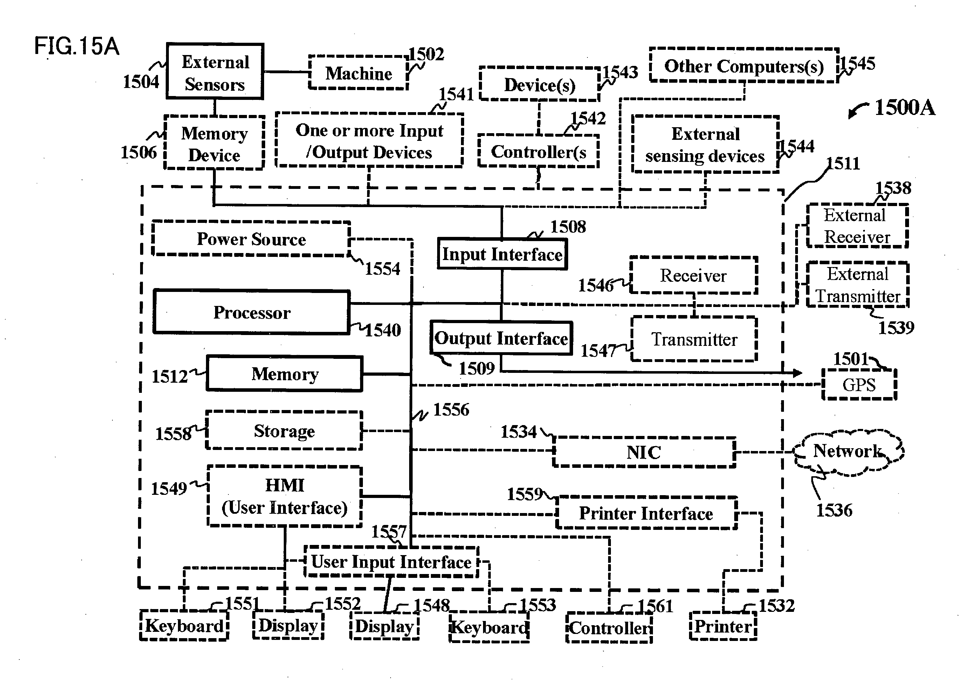

FIG. 15A is a block diagram of illustrating the method of FIG. 1A, that can be implemented using an alternate computer, according to some embodiments of the present disclosure.
[Fig. 15B]

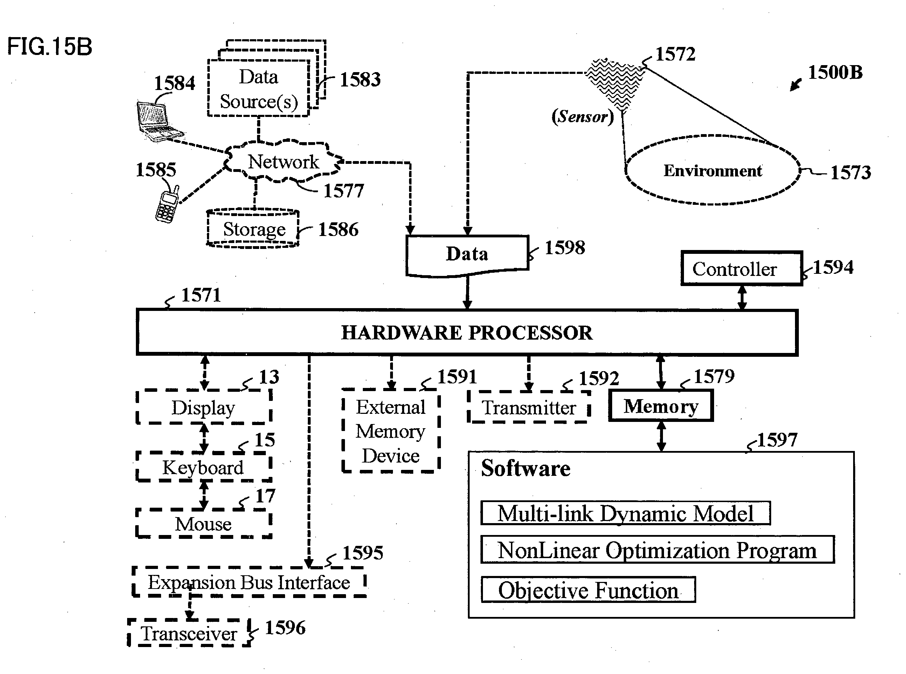

FIG. 15B is a block diagram illustrating some components of a data processing system used for implementing some methods associated with a robot device, according to some embodiments of the present disclosure.
[Fig. 16A]

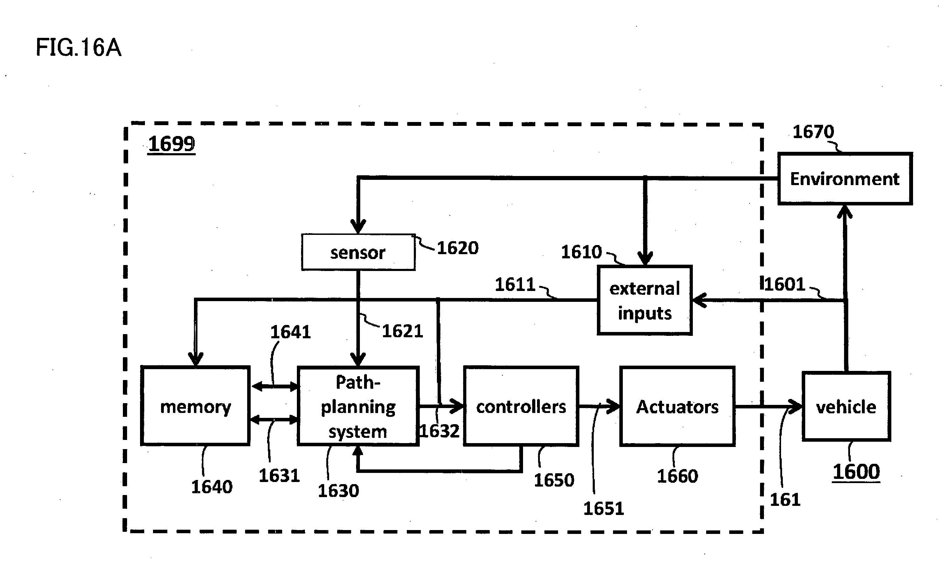

FIG. 16A is a block diagram illustrating some components used for controlling a vehicle, according to some embodiments of the present disclosure.
[Fig. 16B]

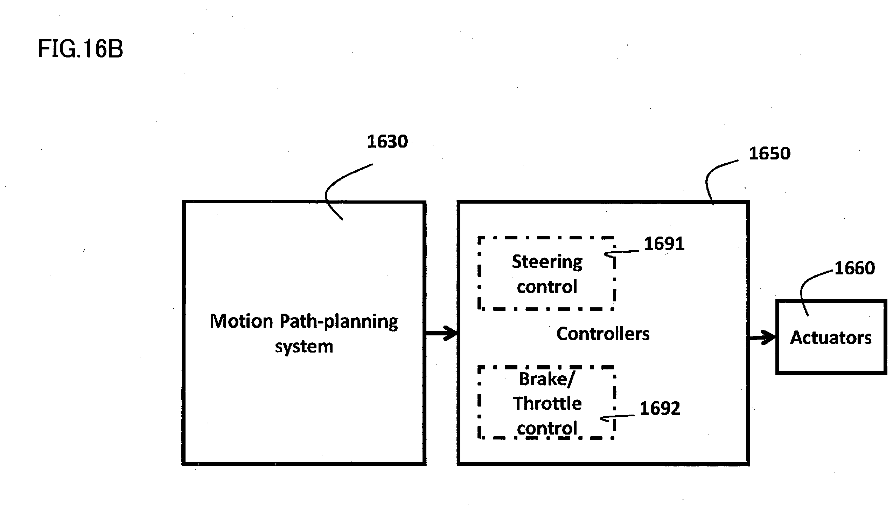

FIG. 16B is a block diagram illustrating some components used for the motion path-planning system and some vehicle controllers of a vehicle, according to some embodiments of the present disclosure.
[Fig. 16C]

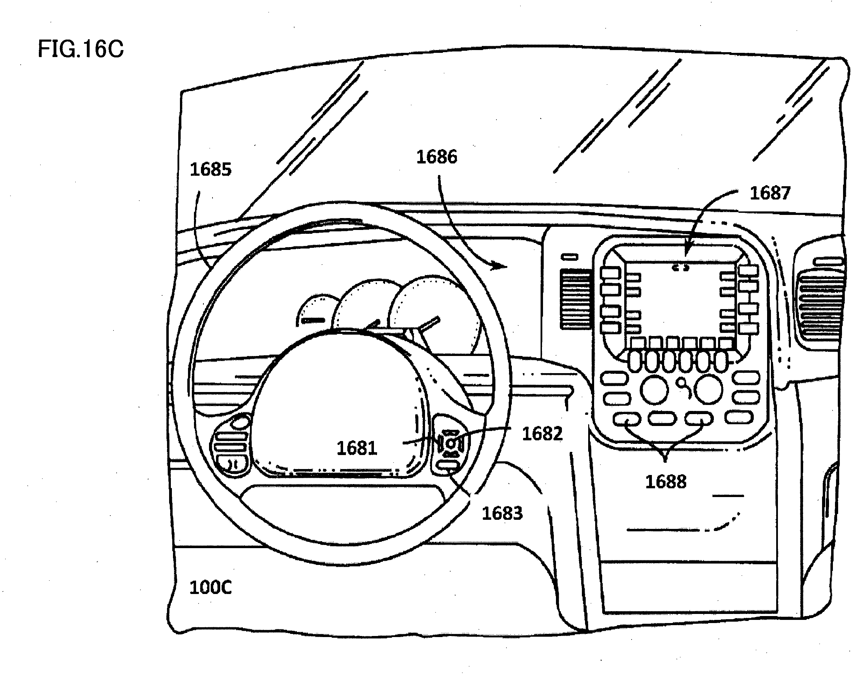

FIG. 16C is a block diagram illustrating some components of an interior of a vehicle, according to some embodiments of the present disclosure.

[Description of Embodiments]

While the above-identified drawings set forth presently disclosed embodiments, other embodiments are also contemplated, as noted in the discussion. This disclosure presents illustrative embodiments by way of representation and not limitation.

The present disclosure relates to methods and systems for trajectory optimization for dynamical systems, and more particularly to nonlinear robotic systems with geometric constraints, while the claimed embodiments are defined in the independent claims. Specifically, the below discussed embodiments of Figs. 9A-16C relate to embodiments according to the invention, while the remaining Figures and embodiments are provided for illustrative purposes only and because they are useful for understanding the claimed invention.

FIG. 1A is a flow diagram illustrating some method steps for implementing a method, according to embodiments of the present disclosure.

Step 115 of FIG. 1A includes receive inputs via a transceiver, the inputs include sensor data, robot operation and dynamics (ROD) data, a multi-link dynamic (MLD) model, a nonlinear optimization (NLO) program, and an objective function.

The robot dynamics is the set of differential (or difference equations) that represent the evolution of the states of the robot. The states of a robot are generally represented by the angular position and velocities of the joints of the robot. Mathematically, the states of a system are represented as $x = [x_1, x_2, ..., x_N]^T$. Then the dynamics of the robot is represented in the most general setting by a set of differential equations $x = f(x,u)$, where the term $u$ denotes the input to the robot $u = [u_1, u_2, ..., u_M]^T$, which is generally the motor torques applied at each joint of the robot. The operation constraints for the robot may be represented by the control limits for the motor torques, i.e., $u E U$, where $U \in R^M$ is a known set. The ROD data for the data contains this information which is then used by the NLO program for optimization.

Since the robots are controlled by a computer-instrumented system in discrete-time, the NLO program requires the robot dynamics equation in discrete-time. In discrete-time, the robot dynamics can be written as $x_{k+1} = f(x_k, u_k)$, where $x_k$, $u_k$ represents the state and control at discrete time $k$ and $f$ represents the discrete-time dynamics for the robot. There are several ways that the discrete-time dynamics information for a robot can be derived from the continuous-time dynamics information.

Step 120 of FIG. 1A includes determining trajectories including a path with a starting pose and an ending pose over a sequence of time intervals while satisfying dynamic constraints and geometric constraints on a robot arm, the robot arm is connected to a robot drive having motors for moving the robot arm.

Step 125 of FIG. 1A includes determining the dynamic constraints based on dynamics of each link from the ROD data, wherein the dynamics of each link includes different masses, geometry and moment of inertia tensor, that is obtained from the ROD data. For example, the dynamics of the first link, the second link and the gripper, include a mass, a geometry and a moment of inertia tensor, for obstacle avoidance, that is obtained from the ROD data.

The non-linear optimization NLO program for trajectory optimizes an objective function that mathematically represents the objective for the robot. The objective is generally represented as a cost function that depends on the state and control applied by the robot. Mathematically, the objective is represented as the sum of the cost of the state and control for a sequence of state and controls, i.e., $J = \Sigma_k c(x_k, u_k)$, where $c(x_k, u_k)$ represents the cost function for state and control at the discrete time instant k. The set $X$ and set $U$ represent the limits on the states and controls. Such limits can arise due to physical limitations of the robot. The non-linear program for trajectory optimization is mathematically written as follows.

$$\min_{u_k, x_k} \sum_{k \in [0,T]} c(x_k, u_k)$$

such that

$$x_{k+1} = f(x_k, u_k), \ \forall \ k \in [0, T]$$

$$x_k \in X \ and \ u_k \in U \ \forall k \in [0, T]$$

The NLO program then considers the optimization problem over the full horizon of T steps and solves it using a gradient-based method. The gradient-based techniques require that the cost function $c(x_k, u_k)$ as well as the constraint $x_{k+1} = f(x_k, u_k)$ are smooth and atleast first-order differentiable. In presence of non-differentiable constraints or objective function, the NLO program can't ensure feasibility or optimality of solutions.

Some embodiments of this present disclosure are based on the realization that one can determine the gradient of non-smooth functions using advanced mathematics under certain special conditions. More specifically, the present disclosure makes use of Danskin's theorem (Theorem 10.2.1 in F. Facchinei and J.-S. Pang, Finite-Dimensional Variational Inequalities and Complementarity Problems, Volume II, New York, NY: Springer, 2003.). We describe the theorem for clarity of presentation. Let $K \subseteq R^m$ be a non-empty, closed set, $\Omega \subseteq R^n$ be a nonempty, open set and $g: R^n \times R^m \to R$ be a continuous function defined on $\Omega \times K$. Consider the following parametric optimization problem

$$h(u) \equiv \min_{y \in K} g(u, v)$$

for the given values of parameter $u \in \Omega$. The function $h(u): \Omega \to R \cup \{-\infty\}$ is the optimal value function that is a function of only the parameters in the optimization problem. Suppose the minimizer of $h(u)$ is unique for all $u \in \Omega$ and is denoted as $v(u)$. Then the gradient of $h(u)$ is given as $\nabla h(u) = \nabla_u g(u, v(u))$. Danskin's theorem concerns the differentiability property of $h(x)$.

Determine the geometric constraints as a first-order differentiable function by generating a coordinate grid of an environment from the sensor data, to determine Cartesian coordinates of at least one obstacle and end-points of each link. Wherein the geometric constraints are determined by a parameterization of each link length using the end-point's Cartesian coordinates of each link, and then finding a minimum of a distance of a parameterized position from each of the at least one obstacle in the environment. The at least one object can be one of convex shape or non-convex shape, in a 2D or 3D space, in the environment. Also, the at least one object can be non-convex shape, then a convex decomposition program can be utilized to convert the non-convex shape to an estimated convex shape.

Step 130 of FIG. 1A includes using the MLD model to formulate the NLO program for the robot arm, the NLO program uses as inputs the starting and ending pose, the dynamic and geometric constraints, to optimize the objective function of the trajectories while satisfying the dynamic and geometric constraints and robot arm operating constraints, for each time interval in the sequence of time intervals, so that the trajectories follow the path between the starting pose and the ending pose. The objective function can be a sum of a function of the states and control inputs of the robot arm over the sequence of time intervals along the trajectories for the path from the starting pose to the ending pose.

Step 135 of FIG. 1A includes control the motors of the robot drive to move the robot arm based upon the trajectories.

Embodiments of the present disclosure provide unique aspects, by non-limiting example, allow to model the collision avoidance between the obstacle and the robot using the geometric constraints. Geometric constraint imposes that the minimum distance between obstacle and the robot arm is sufficiently large to avoid collision. To accomplish this using a differentiable constraint, the present disclosure, circumscribes the obstacle using the smallest sphere and parameterizes the robot by end-points of the robot. The end-points of the robot are defined so that any point on the robot can be obtained by using a convex combination of the end-points. A convex combination of the end-points is a summation of the end-points where the coefficients for each end-point is nonnegative.

FIG. 1B is a block diagram illustrating some components used for implementing some methods, according to some embodiments of the present disclosure.

According to embodiments of the present disclosure, the robotic device 150 consists of mechanical system 160, sensors 170, control system 180, network 193 and power supply 195. The mechanical system 160 consist of robot arm 161, gripper 163 and base for gripper 165. The sensors can consist of environment sensor 171, position sensor 173, and velocity sensor 174. The control system consist of a data processing system 181.

FIG. 1C is a block diagram illustrating some steps using the multi-link dynamic (MLD) model to formulate the nonlinear optimization (NOP) program for robot arm, according to some embodiments of the present disclosure. The algorithm for determining the collision free trajectories proceeds by first discretizing the dynamics of the MLDM using an integration method to obtain a set of nonlinear algebraic equations describing the evolution of the robot arm 131. Using the disceretized equations the positions of the end points of the robot are defined at each instant of time 132 using additional algebraic equations. The obstacles are circumscribes in a sphere of appropriate radius 133. The geometric constraints are imposed 134 by requiring that the shortest distance between the sphere circumscribing the obstacle and the set of convex combinations of the end points of the robot are larger than the radius of the sphere circumscribing the obstacle. The set of discretized dynamics constraints, the equations modeling the end points of robot and the collision avoidance constraint together form the constraint of the nonlinear optimization program in which an appropriate objective function is minimized 136. The solution of the nonlinear optimization program 136 yields the collision free trajectory for the robot.

FIG. 1D is a flow diagram illustrating some steps used for implementing some methods associated with a robot device, according to some embodiments of the present disclosure.

In some embodiment, the trajectory controller consists of a trajectory generator 142 and a control module 146 which communicate via a communication channel 144. The static/dynamic obstacles as well as the workspace of the robot is sensed using sensor(s) like RGB-D cameras and/or LiDARs. The trajectory generator 142 is a computer software that uses the sensor data 141 from environment sensors as well as the set of constraints 143 (dynamics of the robot as well as the control and state limits for the robot) to optimize an objective function 145. The objective function 145 mathematically reflects the goal for the robot. In general, the objective function for the robot is defined as a sum of user-defined cost over the sequence of states and inputs for the trajectory. More conceretely, for the trajectory $x_T$ = {,$x_1$, ..., $x_T$}, $u_T$ = {$u_0$, $u_1$, ..., $u_{T-1}$}, the objective function 145 is written as ., $J = \Sigma_k c(x_k, u_k)$, where $c(x_k, u_k)$ represents the cost function for state and control at the discrete time instant k. The trajectory generator optimizes this function by using the gradient of the objective, as well as the constraints at each of the collocation points along the trajectory. And generates the optimal trajectory 144 $x_T^* = \{x_0^*, x_1^*, ..., x_T^*\}, \ u_T^* = \ \{u_0^*, u_1^*, ..., u_{T-1}^*\}$. This trajectory is then passed along to the control module 146, which then communicates to the motor controller 152 of the joints of the robot via a communication channel 151. The motor controller then controls the joints of the robot by generating the desired torque 157 at every joint of the robot while communicating with the motor controller over channel 153. The states of the robot are monitored by the control module using the communication channel 159 using the encoders at every joint of the robot.

FIG. 2A a scematic illustrating some steps of a method having a path that avoids objects, according to some embodiment of the present disclosure.

FIG. 2A a schematic illustrating some steps of a method having a path that avoids objects, according to some embodiment of the present disclosure. The obstacles 201 are represented as spheres. The trajectory without obstacle collision 202 is a trajectory that does intrude the sphere. The trajectory with collision 203 is a trjectory that intrudes the sphere.

FIG. 2B a scematic illustrating some steps of a method with a gripper, according to some embodiment of the present disclosure. The robot base 225 is connected to robot arm 221. The robot arm 221 is connected by a link to another arm 222 which in turn is connected by a link to a gripper 223. The end points 211, 212, 226, 225 of the first robot arm 221 are defined such that every point on the robot arm can be obtained as a convex combination of the end points. Similarly, the end points 213, 214, 215, 216 of the second robot arm 222 are defined such that every point on the robot arm can be obtained as a convex combination of the end points. The end points 217, 218, 219, 220 are defined such that any point on the gripper 223 can be obtained as the convex combination of the end points.

FIG. 3 is a scematic illustrating a two link planar manipulator with a circular obstacle in the coordinate reference frame, according to some embodiment of the present disclosure.

FIG. 3 depicts a two link 305, 306 planar manipulator with a circular obstacle 310 in the coordinate reference frame. The end-points of the first link are $v_1$ 312, $v_2$ 314 while the end of the second link are $v_2$ 314, $v_3$ 316. The quantities $L_1$, $l_1$ and $\theta_1$ are the length, the displacement of the center of mass and the angle (defined counter clockwise) of the first link 305 and the quantities $L_2$, $l_2$ and $\theta_2$ are the length, the displacement of the center of mass and the angle (defined counter clockwise) of the second link 306, respectively. The obstacle 310 is a circle defined by the center at $v_0$ 318 and the radius R.

The gemoetric constraints modeling the collision avoidance are explained in terms of the two-link planar manipulator. Define the function $dist(a,b,v_0)$ as $dist(a,b, v_0) = min_{\alpha \in [0,1]} \| (\alpha a + (1 - \alpha)b) - v_0 \|^2$ where $a,b$ are points in the two-dimensional plane. The function $dist(a,b, v_0)$ is indeed the square of the Euclidean distance between the line joining $a, b$ from the point $v_0$. A key realization of the present disclosure is that the solution of the minimization problem is unique for any choice of $(a, b, v_0)$. In one embodiment of the present disclosure, the geometric constraint for the two link planar manipulator is posed as

$$dist(v_1, v_2, v_0) \geq R^2 \text{ and } dist(v_2, v_3, v_0) \geq R^2 \qquad (\text{Eq. 1})$$

It is evident that satisfaction (Eq. 1) implies that the maniulators do not penetrate the obstacle. A key realization in the present disclosure is that the derivative of the function $dist(a,b, v_0)$ can be obtained using the Danskin's Theorem. In another embodiment of the present disclosure, the geometric constraint for the two link manipulator is posed as

$$\sqrt{dist(v_1, v_2, v_0) + \rho^2} \geq R + \rho \text{ and } \sqrt{dist(v_2, v_3, v_0) + \rho^2} \geq R + \rho.$$

$$(\text{Eq. 2})$$

for some small constant $\rho > 0$. It is evident that satisfaction of (Eq. 2) implies that the manipulators do not penetrate the obstacle. A key realization in the present disclosure is that use of the square-root and the use of the perturbation $\rho$ ensures that even when the function $dist(v_1, v_2, v_0)$ vanishes, the left hand side of (Eq. 2) is differentiable.

FIG. 4 is a scematic illustrating a solution obtained by the solver proposed in the paper for a planar three (3) DoF manipulator in the presence of an obstacle, an initial position of the manipulator end-effector is (0.6, 0) and a target position is (0, 0.6), according to some embodiment of the present disclosure.

FIG. 4 depicts the movement of a 3 DoF manipulator with three links 402, 404, 406 in the presence of two obstacles 408, 410 that is obtained by solving the nonlinear optimization program including the geometric constraints according to some embodiments of the present disclosure. The manipulator starts from the initial position of (0.6, 0) and moves counter clockwise toward the obstacle 408. In doing so the link 402 start folding toward the link 404. Then the manipulator starts to move clockwise toward the final point. In doing so it further bends links as necessary to avoid colliding with the obstacle 410. Finally, the manipulator unfolds all the arms to reach the final position.

FIG. 5A, FIG. 5B and FIG. 5C are graphs illustrating optimal control obtained for the 3 DoF manipulator system, according to some embodiment of the present disclosure.

FIG. 5A denotes the optimal inputs for the angular accelaration of the link 406 that allows to execute the motion in FIG. 4. FIG. 5B denotes the optimal inputs for the angular accelaration of the link 404 that allows to execute the motion in FIG. 4. FIG. 5C denotes the optimal inputs for the angular accelaration of the link 402 that allows to execute the motion in FIG. 4.

FIG. 6A to FIG. 6F are graphs illustrating state trajectories obtained for the 3 DoF manipulator system, according to some embodiment of the present disclosure.

FIG. 6A denotes the angular position of the link 406 and FIG. 6B denotes the angular velocity of the link 406 that results from the execuing the optimal control in FIG. 5. FIG. 6C denotes the angular position of the link 404 and FIG. 6D denotes the angular velocity of the link 404 that results from the execuing the optimal control in FIG. 5. FIG. 6E denotes the angular position of the link 402 and FIG. 6F denotes the angular velocity of the link 402 that results from the execuing the optimal control in FIG. 5

FIG. 7A and FIG. 7B are schematics illustrating different types of robot devices including a robot arm, according to some embodiment of the present disclosure.

Figure 7A shows a schematic of a gripper 701 that is attached to the end-effector of the robot in some embodiment of the present disclosure. The gripper 701 is attached to the end-effector of a robot via the base of the gripper 712. In some embodiement of the gripper 701, the gripper is equipped with two parallel jaws 711 which can move in the lateral direction 710 to grasp any object that robot is supposed to grasp.

FIG. 7B depicts an exemplary holonomic cart containing a robotic manipulator. In some embodiments, robot 702 having a moveable cart 732 has a robotic arm 722 with links 723, 725 and a gripper 727 mounted on the cart 732. The gripper 727 can grip objects within an environment. The cart 732 may contain one or more wheels 711, 712, which may be holonomic wheels that operate with two degrees of freedom. In further embodiments, a wrap around front conveyor belt 71 may be included on the holonomic cart 732. In some examples, the wrap around front conveyer belt 71 may allow the robot 702 to not have to rotate its gripper 727 to the left or right when unloading or loading boxes from or to a truck container or pallet (not shown). The mechanical system may include components described above with respect to FIG. 7A, including a robotic arm 722, a gripper 727, a conveyer belt 71, a (movable or holonomic) cart 732, and one or more wheels 711, 712. The sensing system can have one or more sensors attached to a robotic arm 722, such as 2D sensors and/or 3D depth sensors (not shown) that sense information about the environment as the robotic arm 722 moves. Further, lights 737 can be positioned on the front, side, back, underneath or anywhere on the cart 732 or gripper 727.

FIG. 8 is a flow diagram illustrating some steps used to implement a method, according to some embodiments of the present disclosure. For example, FIG. 8 is schematic flowchart showing the steps in the embodiment of the present disclosure. Step 810 is an input to an for an initial and a final position of the robot, constraints on the limits of the states and controls of the robot, and a cost function to be minimized. The algorithms also takes as input at step 815 of the locations of the obstacles that the robot must avoid and also the multi-link dynamic model (MLDM) at step 820. The algorithm proceeds to discretize the dynamics in MLDM of step 825 using an integration method to obtain a set of nonlinear equations describing the trajectory of the robot. For each obstacle in the input step 815, the algorithm proceeds to define the smallest sphere circumscribing the obstacle of step 830. Next the algorithm introduces additional variables that denote the trajectory of the end-points of the links of the robot over time of step 831. The end-points are chosen so that any point on the link can be obtaineed as a convex combination of the end-points. Additional algebraic constraints relating the end-points of the links to the variables in the discretized MLDM are defined in step 832. The geometric constraints imposing the avoidance of collision are generated for each pair of obstacle and links in the robot. Then the nonlinear optimization program of step 840 to minimize the objective function provided as input 810. The nonlinear optimization program step 840 consists of the variables in MLDM discretization, additional variables denoting the end-points and the constraints include the algebraic constraints from the MLDM discretization, additional algebraic constraints for end-points and the geometric constraints.

## Car Embodiments

FIG. 9A is a flow diagram illustrating some method steps of a method associated with a vehicle, according to an embodiment of the present disclosure.

Step 915 of FIG. 9A includes receive inputs via a transceiver, the inputs include sensor data, vehicle operation and dynamics (VOD) data, a multi-link dynamic (MLD) model, a nonlinear optimization (NLO) program, and an objective function.

The vehicle dynamics is the set of differential (or difference equations) that represent the evolution of the states of the vehicle. The states of a vehicle are generally represented by the position and velocities of the vehicle in different directions. Mathematically, the states of a system are represented as $x = [x_1, x_2, ..., x_N]^T$. Then the dynamics of the vehicle is represented in the most general setting by a set of differential equations $x = f(x,u)$, where the term $u$ denotes the input to the vehicle $u = [u_1, u_2, ..., u_M]^T$, which is generally the accelerations applied and steering angle for the vehicle. The operation constraints for the vehicle may be represented by the control limits for the accelerations, i.e., $u \in U$, where $U \in R^M$ is a known set. The VOD data for the data contains this information which is then used by the NLO program for optimization.

Since the vehicles are controlled by a computer-instrumented system in discrete-time, the NLO program requires the vehicle dynamics equation in discrete-time. In discrete-time, the vehicle dynamics can be written as $x_{k+1} = f(x_k, u_k)$, where $x_k$, $u_k$ represents the state and control at discrete time $k$ and $f$ represents the discrete-time dynamics for the vehicle. There are several ways that the discrete-time dynamics information for a vehicle can be derived from the continuous-time dynamics information.

Step 920 of FIG. 9A includes determining trajectories including a path with a starting point and an ending point over a sequence of time intervals while satisfying dynamic constraints and geometric constraints on a vehicle.

Step 925 of FIG. 9A includes determining the dynamic constraints based on dynamics of each link from the VOD data, wherein the dynamics of vehicle includes masses, geometry and moment of inertia tensor, that is obtained from the VOD data.

The non-linear optimization NLO program for trajectory optimizes an objective function that mathematically represents the objective for the vehicle. The objective is generally represented as a cost function that depends on the state and control applied by the vehicle. Mathematically, the objective is represented as the sum of the cost of the state and control for a sequence of state and controls, i.e., $J = \Sigma_k c(x_k, u_k)$, where $c(x_k, u_k)$ represents the cost function for state and control at the discrete time instant k. The set $X$ and set $U$ represent the limits on the states and controls. Such limits can arise due to physical limitations of the vehicle. The non-linear program for trajectory optimization is mathematically written as follows.

$$\min_{u_k, x_k} \sum_{k \in [0,T]} c(x_k, u_k)$$

such that

$$x_{k+1} = f(x_k, u_k), \forall\, k \in [0,\, T]$$
$$x_k \in X \text{ and } u_k \in U\; \forall k \in [0,\, T]$$

The NLO program then considers the optimization problem over the full horizon of T steps and solves it using a gradient-based method. The gradient-based techniques require that the cost function $c(x_k, u_k)$ as well as the constraint $x_{k+1} = f(x_k, u_k)$ are smooth and atleast first-order differentiable. In presence of non-differentiable constraints or objective function, the NLO program can't ensure feasibility or optimality of solutions.

Some embodiments of this present disclosure are based on the realization that one can determine the gradient of non-smooth functions using advanced mathematics under certain special conditions. More specifically, the present disclosure makes use of Danskin's theorem (Theorem 10.2.1 in F. Facchinei and J.-S. Pang, Finite-Dimensional Variational Inequalities and Complementarity Problems, Volume II, New York, NY: Springer, 2003.). We describe the theorem for clarity of presentation. Let $K \subseteq R^m$ be a non-empty, closed set, $\Omega \subseteq R^n$ be a nonempty, open set and $g: R^n \times R^m \to R$ be a continuous function defined on $\Omega \times K$. Consider the following parametric optimization problem

$$h(u) \equiv \min_{y \in K} g(u, v)$$

for the given values of parameter $u \in \Omega$. The function $h(u): \Omega \to R \cup \{-\infty\}$ is the optimal value function that is a function of only the parameters in the optimization problem. Suppose the minimizer of $h(u)$ is unique for all $u \in \Omega$ and is denoted as $v(u)$. Then the gradient of $h(u)$ is given as $\nabla h(u) = \nabla_u g(u, v(u))$. Danskin's theorem concerns the differentiability property of $h(x)$.

Determine the geometric constraints as a first-order differentiable function by generating a coordinate grid of an environment from the sensor data, to determine Cartesian coordinates of at least one obstacle and end-points of vehicle. Wherein the geometric constraints are determined by a parameterization of vehicle using the end-point's Cartesian coordinates of vehicle, and then finding a minimum of a distance of a parameterized position from each of the at least one obstacle in the environment. The at least one object can be one of convex shape or non-convex shape, in a 2D or 3D space, in the environment. Also, the at least one object can be non-convex shape, then a convex decomposition program can be utilized to convert the non-convex shape to an estimated convex shape.

Step 930 of FIG. 9A includes using the MLD model to formulate the NLO program for the vehicle, the NLO program uses as inputs the starting and ending pose, the dynamic and geometric constraints, to optimize the objective function of the trajectories while satisfying the dynamic and geometric constraints and vehicle operating constraints, for each time interval in the sequence of time intervals, so that the trajectories follow the path between the starting pose and the ending pose. The objective function can be a sum of a function of the states and control inputs of the vehicle over the sequence of time intervals along the trajectories for the path from the starting pose to the ending pose.

Step 935 of FIG. 9A includes control the motors and steering wheel of the vehicle to move the vehicle based upon the trajectories.

The embodiments of the present invention allow to model the collision avoidance between the obstacle and the vehicle using the geometric constraints. Geometric constraint imposes that the minimum distance between obstacle and the vehicle is sufficiently large to avoid collision. To accomplish this using a differentiable constraint, the present disclosure circumscribes the obstacle using the smallest sphere and parameterizes the vehicle by end-points of the vehicle. The end-points of the vehicle are defined so that any point on the vehicle can be obtained by using a convex combination of the end-points. A convex combination of the end-points is a summation of the end-points where the coefficients for each end-point is nonnegative.

FIG. 9B is a flow diagram illustrating some steps used for implementing step 935 of FIG. 9A associated with a vehicle, according to some embodiments of the present disclosure. Step 931 discloses to discretize the dynamics of the VOD using an integration method (such as explicit Euler, implicit Euler etc.) to obtain a set of nonlinear algebraic constraints describing the evolution over time of the vehicle. Step 932 includes additional algebraic constraints modeling the position of the ends of vehicle such that the set of convex combination of the end points circumscribes the vehicle. Step 933 circumscribes the obstacles using a sphere. Step 934 Impose the geometric constraints that require that the minimum distance between the convex combination of the end points of the robot arms and the obstacles is larger than the radius of the sphere. Step 936 solves the nonlinear optimization program (NOP) consisting of the discretize dynamics of the VOD, algebraic constraints modeling the position of the ends of each of the link-arms, the geometric constraints, bounds on the robotic actuators.

FIG. 10A is a scematic illustrating some steps used for implementing a method associated with a vehicle, according to some embodiments of the present disclosure. For example, FIG. 10A is a schematic illustrating the steps used for implementing a method for trajectory optimization 1009 for a vehicle. The different sensors mounted on the vehicle provide the trajectory optimizer the sensor data 1001. This sensor data 1001 generates the location as well as approximate geometry of the obstacles for the vehicle. The trajectory optimizer software 1002 uses this data along with the differential constraints due to the dynamics of the vehicle to generate a trajectory that optimizes an objective function 1005 for the motion of the vehicle. The objective function is the sum of cost of state and inputs at every step along the trajectory of the vehicle. The trajectory generator 1002 sends the optimal trajectory to the control module 1015 using a communication network 1014. The control module controls the inputs of the vehicle by passing the desired control inputs to the motor controller 1012 via the communciation channel 1011. The motor controller then controls the steering and velocity of the vehicle 1016 to follow the optimal trajectory via the commication channel 1013. The steering and velocity are sensed and send back to the control module via the link 1019.

FIG. 10B is a block diagram illustrating some components used for a motion path-planning system for a vehicle, according to some embodiments of the present disclosure. For example, FIG. 10B shows a general structure of the path-planning system 1030 and memory 1040 according to one embodiment of the present disclosure. The path-planning system 1030 can include at least one processor 1080 for executing modules of the path-planning system 1030. The processor 1080 is connected 1031, 1041 to a memory 1040 that stores data 1042. The memory 1040 also stores 1043 a logic that chooses the data 1042 that is trained to the preferred driving style. The memory 1040 also stores 1044 the sensor data 1021 for a given period of time, which the processor 1080 uses to construct the time-series signal.

FIG. 11 a scematic illustrating some steps of a method having a path that avoids objects for a vehicle, according to some embodiment of the present disclosure. For example, FIG. 11 shows an embodiment of a collision-free trajectory for a vehicle 1114 for a vehicle 1110 in presence of static obstacles 1111. The objective of the vehicle is to from an initial state 1112 to a final state 1113 while avoiding collisions with the obstacles 1111 in minimum time.

FIG. 12 is a flow diagram illustrating some steps used to implement a method for a vehicle, according to some embodiments of the present disclosure. For example, FIG. 12 is schematic flowchart 1201 showing the steps in the embodiment of the present disclosure. The algorithm takes as input 1210 the initial and final position of the vehicle, constraints on the limits of the states and controls of the vehicle, and the cost function to be minimized. The algorithms also takes as input 1215 the locations of the obstacles that the vehicle must avoid and also the Vehicle Operation and Dynamics (VOD) 1220. The algorithm proceeds to discretize the dynamics in VOD 1225 using an integration method to obtain a set of nonlinear equations describing the trajectory of the vehicle. For each obstacle in the input 1215, the algorithm proceeds to define the smallest sphere circumscribing the obstacle 1230. Next the algorithm introduces additional variables that denote the trajectory of the end-points of the vehicle over time 1231. The end-points are chosen so that any point on the vehicle can be obtaineed as a convex combination of the end-points. Additional algebraic constraints relating the end-points of the vehicle to the variables in the discretized VOD are defined 1232. The geometric constraints imposing the avoidance of collision are generated for each pair of obstacle and vehicle. Then the nonlinear optimization program 1240 to minimize the objective function provided as input 1210. The nonlinear optimization program 1240 consists of the variables in VOD discretization, additional variables denoting the end-points and the constraints include the algebraic constraints from the VOD discretization, additional algebraic constraints for end-points and the geometric constraints.

FIG. 13 is a graph diagram illustrating an optimal 2D car trajectory using a method, according to some embodiments of the present disclosure. For example, FIG. 13 depicts the optimal trajectory of the 2D car while avoiding the obstacle. The state of the car consists of the position along horizontal axis, position along the vertical axis, the angle of the car with respect to the horizontal axis and the velocity of the vehicle. The car is intially at the state (0,0,0,0) and the target state is given as $(3,3,\pi/2,0)$. A circular obstacle of radius 1 is positioned at the location (2,2).

FIG. 14A and 14B is a graph diagram illustrating an optimal 2D car input trajectory using a method, according to some embodiments of the present disclosure. For example, FIG. 14A is the optimal trajectory of the angular acceleration of the car, which is one of the control variables, that must be used in order to execute the trajectory in FIG. 13. FIG. 14B is the optimal trajectory of the acceleration of the car, which is one of the control variables, that must be used in order to execute the trajectory in FIG. 13.

## Experimentation

Several concepts were experimented with in order to further comprehend the complexities of solving the technical problem(s) of integrating geometric constraints as well as state and input constraints to automatically generate collision-free, optimal trajectories for a robotic system. Some challenges that needed to be overcome is that checking of collision is typically performed by solving an optimization problem. Such a formulation does not directly lend itself to a differentiable constraint. As a result, most of the conventional techniques for nonlinear programming, which assume at least once differentiability of constraints, are not applicable for trajectory optimization.

Some experimented motion planning techniques included using a computational geometry-based module that performed collision of a path or part of a path with obstacles in an environment. The parts of the path which resulted in collision were rejected by the planning module. However, the collision detection/checking for rigid bodies with non-convex geometries while moving between two points was found to be computationally expensive, and was not further investigated.

Another concept present in many experiments was trajectory optimization so further knowledge could be gained about how to solve some of the challenges faced in developing the embodiments of the present disclosure. For example, some trajectory optimization experiments included a process of generating an optimal sequence of state and control input pairs for a robotic device that drove the robot from a known initial state to a final desired goal state while respecting dynamics of the robot and satisfying state and control constraints imposed on the robot. The dynamics of a robotic system (or other dynamical systems tested during experimentation) was the set of differential equations which represented an evolution of the states of the system, given knowledge of parameters of the system. In particular, these parameters of the robotic system can be inertia and damping properties of the robot. What appeared important to note from this experimentation, is that this process was different from a process of generating a kinematic path for the robot, which doesn't include the dynamics of the robot during optimization.

Some aspects learned from the experimentation is that trajectory optimization is a procedure of generating a sequence of state and inputs to optimize a desired objective function while respecting all the constraints for a system. One experimentation included a trajectory planning approach for trajectory optimization that configured the trajectory planning to use a decomposition of the problem into kinematic planning, which was followed by dynamic planning. The kinematic planning was set up to arrange a path in a configuration space of the robot while checking for possible collisions with obstacles present in the environment. However, several tests during experimentation often resulted in infeasible trajectories or trajectories which were sub-optimal and later realized to be infeasible for the dynamics. What was gained or learned, was that because the kinematic planning module did not consider the dynamics, this resulted in the planning module was not being aware of the dynamics and the control saturation limits of the system. This resulted in trajectories that saturated the control limits of the system or resulted in dynamically non-smooth (i.e., the robot often experienced a very high acceleration during movement) which proved to be undesirable. Thus, a realization of the present disclosure is the incorporation of geometric constraints as well as state and input constraints to automatically generate collision-free, optimal trajectories for a robotic system is highly desirable. This realization additionally allowed for trajectory optimization without the requirement of collision checking between the robot and the obstacles, as it is enforced as a constraint during optimization.

Some other experiments included experimenting with several non-linear optimization techniques that were considered to be used for trajectory optimization. These experiments were divided into two categories, first, direct collocation experimental methods, and second, differential dynamic programming (DDP)-based experimental approaches. In all these experimental techniques, the trajectory of states and controls were discretized in time as $x1, x2, ... , xN,$ and $u1, u2,..., uN$, respectively. Knowledge that was gained was that the direct collocation methods-based experimental methods enforced the integral of the dynamics as a constraint at these time instants, and solved the full optimization problem as an instance of a nonlinear program. Also learned that the collocation-based experimental techniques considered the full problem as an instance of optimization, which appeared to provide a better solution, when compared to DDP-based experimental approaches.

In regard to the DDP-related experimental approaches, the full problem of trajectory optimization was decomposed into a recursive series of smaller problems. Each of the smaller problems operates over an individual control at a single time instant, and solved backwards in time. Consequently, while the direct collocation experiments appeared to provide a better solution, the solution came with a high amount of computational time or at an expense of computational cost. Learned is that the DDP-related techniques provided a solution more quickly but resulted in solutions that suffered in quality. While most of these experimental methods appeared to incorporate state and input constraints, the mere fact of trying to incorporate geometric constraints was not straight forward and proved to be very difficult. This is mainly due to the fact that the collision avoidance for rigid bodies with arbitrary geometry is a non-convex and non-differentiable constraint. Both the DDP as well as the collocation-based techniques are gradient-based approaches which rely on the gradient of the constraint to find feasible solution and thus, can't handle non-differentiable constraints during optimization.

In regard to collision avoidance experimented approaches, such experimented approaches included computing a collision-free trajectory in the configuration space of the robot, and then compute the motor torques using inverse kinematics. The control constraints for the robot were then accounted for using some heuristic approaches like, for example, projection on the allowable control set. However, since using a projection on the allowable set only allows feasible solution, this results in sub-optimal solution for the trajectories.

Some embodiments of the disclosure are based on the realization derived from experimentation that most trajectory optimization problems in the presence of state and control constraints can be solved using a non-linear optimization technique. However, the geometric constraints imposed due to the movement of the manipulator arm in the presence of the obstacles in the environment result in non-convex, non-differentiable constraints as the minimum function is, in general, mathematically non-differentiable. In order to avoid collisions with obstacles, an optimization algorithm needs to ensure that the minimum distance of each of the links from all obstacles is always positive during the motion of the links. Since all the non-linear optimization techniques use the gradient information of the all the constraints, the non-differentiability of the geometric constraint makes it infeasible to be used with most of the non-linear optimization techniques.

**Features**

*Robot Device*

According to another non-claimed embodiment of the present disclosure, a computing system including a processor and an accessible memory. Wherein the computing system is configured to receive inputs including sensor data, robot operation and dynamics (ROD) data, a multi-link dynamic (MLD) model, a nonlinear optimization (NLO) program, and an objective function. Determine trajectories including a path with a starting pose and an ending pose over a sequence of time intervals while satisfying dynamic constraints and geometric constraints on a robot arm, the robot arm is connected to a robot drive having motors for moving the robot arm. Determine the dynamic constraints based on dynamics of each link from the ROD data. Determine the geometric constraints as a first-order differentiable function by generating a coordinate grid of an environment from the sensor data, to determine Cartesian coordinates of at least one obstacle and end-points of each link. Use the MLD model to formulate the NLO program for the robot arm, the NLO program uses as inputs the starting and ending pose, the dynamic and geometric constraints, to optimize the objective function of the trajectories while satisfying the dynamic and geometric constraints and robot arm operating constraints, for each time interval in the sequence of time intervals, so that the trajectories follow the path between the starting pose and the ending pose. Control the motors of the robot drive to move the robot arm based upon the trajectories. Wherein the following one or more aspects, or a combination of one or more aspects, below, are contemplated as configuring a modified embodiment of the above embodiment.

According to non-claimed aspects of the present disclosure, the geometric constraints are determined by a parameterization of each link length using the end-point's Cartesian coordinates of each link, and then finding a minimum of a distance of a parameterized position from each of the at least one obstacle in the environment. At least one benefit of the non-claimed aspect can be the objective function is a sum of a function of the states and control inputs of the robot arm over the sequence of time intervals along the trajectories for the path from the starting pose to the ending pose.

Another non-claimed aspect can be that the robot arm operating constraints include at least one motion constraint comprises a maximum linear velocity and a maximum acceleration of the robot arm, and a predetermined range of states, as well as control inputs for operating the robot arm. Wherein the states include each joint angular position and angular velocity including a maximum linear velocity and a maximum acceleration, as well as the control inputs include an amount of torque applied to each joint of the joints. Further, a non-claimed aspect can be that the robot arm includes a base, a first link coupled to the base via a first joint, a second link coupled to the first link via a second joint, the first link interposed between the base and the second link; and a gripper coupled to an end of the second link opposite the second joint via a gripper joint.

Further still, another non-claimed aspect can include the dynamics of each link including different masses, geometry and moment of inertia tensor, that is obtained from the ROD data. Wherein the dynamics of the first link, the second link and the gripper, include a mass, a geometry and a moment of inertia tensor, for obstacle avoidance, that is obtained from the ROD data. A non-claimed aspect can be that the ROD data includes robot arm information including a model of the robot arm that allows for simulation of movements of the robot arm, along with operational control inputs such as torques applied by the motors via the robot drive for moving each joint of the robot arm.

Another non-claimed aspect can include the at least one object is one of convex shape or non-convex shape, in a 2D or 3D space, in the environment. Wherein the at least one object is non-convex shape, then a convex decomposition program utilized to convert the non-convex shape to an estimated convex shape. Further still, another non-claimed aspect can be that the sensor data is obtained from at least one sensor in the environment and is associated with the computing system via a wired connection or a wireless connection, the sensor data is stored in the memory via a transceiver configured to output data and to receive data, such that after each time interval, the sensor data is updated by the at least one sensor.

According to another non-claimed embodiment of the present disclosure, a method for determining trajectories including a path and corresponding control inputs associated with a starting pose and an ending pose. Wherein the path to be traversed is by a robotic device over a sequence of time intervals, while satisfying dynamic constraints and geometric constraints on the robotic device. The robotic device includes a robot arm having multiple links connected to a robot drive having motors for moving the robot arm. The method comprising determining the dynamic constraints based on dynamics of each link that includes different masses, geometry and moment of inertia tensor from dynamics data stored in a memory. Determine the geometric constraints as a first-order differentiable function by generating a coordinate grid of the environment from sensor data stored in the memory, to determine Cartesian coordinates of at least one obstacle and end-points of each link. Using a multi-link dynamics model to formulate a non-linear optimization (NLO) program for the robot arm. The NLO program uses as inputs the starting and ending pose, the dynamic and geometric constraints, to optimize an objective function of the trajectories while satisfying the dynamic and geometric constraints and robot arm operating constraints, for each time interval in the sequence of time intervals, so that the trajectories follow the path between the starting pose and the ending pose. Control the motors of the robot drive to move the robot arm based upon the trajectories. Wherein the following one or more aspects, or a combination of one or more aspects, below, are contemplated as configuring a modified embodiment of the above embodiment.

According to non-claimed aspects of the present disclosure, the geometric constraints can be determined by a parameterization of each link length using the end-point's Cartesian coordinates of each link, and then finding a minimum of a distance of a parameterized position from each of the at least one obstacle in the environment, and the dynamic constraints are determined by the dynamics of each link that includes different masses, geometry and moment of inertia tensor, from the ROD data, such that each link dynamics is considered using an Lagrangian approach.

At least one benefit of the non-claimed aspect can be the objective function is a sum of a function of the states and control inputs of the robot arm over the sequence of time interval along the trajectories for the path from the starting pose to the ending pose. Another non-claimed aspects can be that the optimizing by the objective function is subject to spatial non-convex constraints due to avoidance of a region of the at least one obstacle located in the environment, wherein the determining of at least one spatial non-convex constraint for each trajectory of each link is by defining an interval of values for a projection of a position of a location on an axis of a direction of a motion of the link on the coordinate grid of an environment, to produce a set of spatial non-convex constraints, wherein determining a set of times when the trajectory of each link completes moving from the starting pose to the ending pose for that trajectory, and wherein the optimizing the objective function is subject to the dynamics of each link and the set of spatial non-convex constraints by updating the set of times to optimize the trajectories for the multiple links along the path.

Another non-claimed aspect can be that the robot arm operating constraints include a predetermined range of states and control inputs for operating the robot arm, the robot arm includes a base, a first link coupled to the base via a first joint, a second link coupled to the first link via a second joint, the first link interposed between the base and the second link; and a gripper coupled to an end of the second link opposite the second joint via a gripper joint, wherein the states include each joint angular position and angular velocity, and the control inputs include an amount of torque applied to each joint of the joints.

Another non-claimed aspect may be that a first request is received via a transceiver to provide a specific path through the environment, and sending via the transceiver, a first response to the first request, the first response comprising the specific path, wherein the specific path includes the trajectories that follow the path between the starting pose and the ending pose.

Vehicle

According to another embodiment of the present disclosure, a computing system including a processor and an accessible memory. The computing system configured to receive inputs including sensor data, vehicle operation and dynamics (VOD) data, a vehicle dynamic (VD) model, a nonlinear optimization (NLO) program, and an objective function. Determine trajectories including a path with a starting pose and an ending pose over a sequence of time intervals while satisfying dynamic constraints and geometric constraints on a vehicle. Wherein the vehicle has a motor and a steering drive system for directing the vehicle along the path. Determine the dynamic constraints based on dynamics of the vehicle operation and dynamics (VOD) from the VOD data. Determine the geometric constraints as a first-order differentiable function by generating a coordinate grid of an environment from the sensor data, to determine Cartesian coordinates of at least one obstacle and end-points of the vehicle. Use the VD model to formulate the NLO program for the vehicle. The NLO program uses as inputs the starting and ending pose, the dynamic and geometric constraints, to optimize the objective function of the trajectories while satisfying the dynamic and geometric constraints and vehicle operating constraints, for each time interval in the sequence of time intervals, so that the trajectories move the vehicle from the starting pose to the ending pose. Control the motor of the vehicle and the vehicle steering drive system to move the vehicle based upon the optimized trajectories obtained from the NLO program.

According to another embodiment of the present disclosure, a method for determining trajectories including a path and corresponding control inputs associated with a starting pose and an ending pose. The path to be traversed by a vehicle over a sequence of time intervals, while satisfying dynamic constraints and geometric constraints on the vehicle. The vehicle having a motor and a steering drive system for directing the vehicle along the path. The method includes determining the dynamic constraints based on dynamics of the vehicle that includes different masses, geometry and moment of inertia tensor from vehicle operation and dynamics (VOD) data stored in a memory. Determine the geometric constraints as a first-order differentiable function by generating a coordinate grid of the environment from sensor data stored in the memory, to determine Cartesian coordinates of at least one obstacle and end-points of the vehicle. Using a vehicle dynamic (VD) model to formulate a non-linear optimization (NLO) program for the vehicle. The NLO program uses as inputs the starting and ending pose, the dynamic and geometric constraints, to optimize an objective function of the trajectories while satisfying the dynamic and geometric constraints and vehicle operating constraints, for each time interval in the sequence of time intervals, so that the trajectories move the vehicle from the starting pose to the ending pose. Control the motor of the vehicle and the vehicle steering drive system to move the vehicle based upon the optimized trajectories obtained from the NLO program.

According to another embodiment of the present disclosure, a non-transitory computer-readable medium encoded with executable instructions that, when executed, cause one or more data processing systems to receive inputs including sensor data, vehicle operation and dynamics (VOD), a vehicle dynamic (VD) model, a nonlinear optimization (NLO) program and an objective function. Determine trajectories including a path with a starting pose and an ending pose over a sequence of time intervals while satisfying dynamic constraints and geometric constraints on a vehicle. The vehicle having a motor and a steering drive system for moving and directing the vehicle along the path. Determine the dynamic constraints based on dynamics of the vehicle from the VOD data. Determine the geometric constraints as a first-order differentiable function by generating a coordinate grid of an environment from the sensor data, to determine Cartesian coordinates of at least one obstacle and end-points of the vehicle. Use the VD model to formulate the NLO program for the vehicle. The NLO program uses as inputs the starting and ending pose, the dynamic and geometric constraints, to optimize the objective function of the trajectories while satisfying the dynamic and geometric constraints and the vehicle operating constraints, for each time interval in the sequence of time intervals, so that the trajectories move the vehicle from the starting pose to the ending pose. Control the motor of the vehicle and the vehicle steering drive system to move the vehicle based upon the optimized trajectories obtained from the NLO program.

According to another embodiment of the present disclosure, a vehicle system for determining trajectories including a path and corresponding control inputs associated with a starting pose and an ending pose. The path to be traversed by a vehicle over a sequence of time intervals, while satisfying dynamic constraints and geometric constraints on the vehicle. Wherein the vehicle having a motor and a steering drive system for directing the vehicle along the path, and an accessible memory. The memory includes sensor data, vehicle operational and dynamics (VOD) data, a vehicle dynamics (VD) model, a non-linear optimization (NLO) program and an objective function. The vehicle system including a process is configured to determine the dynamic constraints based on dynamics of the vehicle that includes different masses, geometry and moment of inertia tensor from the VOD data. Determine the geometric constraints as a first-order differentiable function by generating a coordinate grid of the environment from the sensor data, to determine Cartesian coordinates of at least one obstacle and end-points of the vehicle. Using the VD model to formulate the NLO program for the vehicle, the NLO program uses as inputs the starting and ending pose. The dynamic and geometric constraints, to optimize an objective function of the trajectories while satisfying the dynamic and geometric constraints and vehicle operating constraints, for each time interval in the sequence of time intervals, so that the trajectories move the vehicle from the starting pose to the ending pose. Control the motor of the vehicle and the vehicle steering drive system to move the vehicle based upon the optimized trajectories obtained from the NLO program.

Wherein the following one or more aspects, or a combination of one or more aspects, below, are contemplated as configuring a modified embodiment of the above embodiments.

Another aspect can be that the objective function is a sum of a function of the states and control inputs of the vehicle over the sequence of time intervals along the trajectories for the path from the starting pose to the ending pose. In addition, another aspect can be the vehicle operating constraints include at least one motion constraint comprises a maximum linear velocity and a maximum acceleration of the vehicle, and a predetermined range of states, as well as control inputs for operating the vehicle.

Still another aspect is that the vehicle includes the dynamics of the vehicle includes different masses, geometry and moment of inertia tensor, that is obtained from the VOD data. Wherein the dynamics of the vehicle include a mass, a geometry and a moment of inertia tensor, for obstacle avoidance, that is obtained from the VOD data.

An aspect can be that the VOD data includes vehicle information including a model of the vehicle that allows for simulation of movements of the vehicle, along with operational control inputs for moving the vehicle.

Is possible an aspect can be that the at least one object is one of convex shape or non-convex shape, in a 2D or 3D space, in the environment. Wherein the at least one object is non-convex shape, then a convex decomposition program utilized to convert the non-convex shape to an estimated convex shape.

An aspect that the sensor data can be obtained from at least one sensor in the environment and is associated with the computing system via a wired connection or a wireless connection, the sensor data is stored in the memory via a transceiver configured to output data and to receive data, such that after each time interval, the sensor data is updated by the at least one sensor.

**Definitions**

According to aspects of the present disclosure, and based on experimentation, the following definitions have been established, and certainly are not a complete definition of each phrase or term. Wherein the provided definitions are merely provided as an example, based upon learnings from experimentation, wherein other interpretations, definitions, and other aspects may pertain. However, for at least a mere basic preview of the phrase or term presented, such definitions have been provided.

*Processor,* by non-limiting example, as stated in claim 1 can be computer hardware, i.e. a logic circuitry that responds to and processes the basic instructions that drive a computer to implement the algorithm described in present disclosure.

FIG. 15A is a block diagram of illustrating the method of FIG. 1A, that can be implemented using an alternate computer, according to embodiments of the present disclosure. The components 1500 can include a computer 1511 having a processor 1540, computer readable memory 1512, storage 1558 and user interface 1549 with display 1552 and keyboard 1551, which are connected through bus 1556. For example, the user interface 1549 in communication with the processor 1540 and the computer readable memory 1512 acquires and stores the data in the computer readable memory 1512 upon receiving an input from a surface, keyboard 1553, of the user interface 1557 by a user. The data can include robot, vehicle, environmental, etc. types of data or data associated with trajectory optimization techniques for dynamical systems with nonlinear constraints.

The computer 1511 can include a power source 1554; depending upon the application the power source 1554 may be optionally located outside of the computer 1511. Linked through bus 1556 can be a user input interface 1557 adapted to connect to a display device 1548, wherein the display device 1548 can include a computer monitor, camera, television, projector, or mobile device, among others. A printer interface 1559 can also be connected through bus 1556 and adapted to connect to a printing device 1532, wherein the printing device 1532 can include a liquid inkjet printer, solid ink printer, large-scale commercial printer, thermal printer, UV printer, or dye-sublimation printer, among others. A network interface controller (NIC) 1534 is adapted to connect through the bus 1556 to a network 1536, wherein data or other data, among other things, can be rendered on a third party display device, third party imaging device, and/or third party printing device outside of the computer 1511. The computer / processor 1511 can include a GPS 1501 connected to bus 1556.

Still referring to FIG. 15A, the data or other data, among other things, can be transmitted over a communication channel of the network 1536, and/or stored within the storage system 1558 for storage and/or further processing. Further, the time series data or other data may be received wirelessly or hard wired from a receiver 1546 (or external receiver 1538) or transmitted via a transmitter 1547 (or external transmitter 1539) wirelessly or hard wired, the receiver 1546 and transmitter 1547 are both connected through the bus 1556. The computer 1511 may be connected via an input interface 1508 to external sensing devices 1544 and external input/output devices 1541. The input interface 1508 can be connected to one or more input/output devices 1541, external memory 1506, external sensors 1504, which may be connected to a machine like device 1502. A controller(s) 1542 can be connected to device(s) 1543. Further, other computer(s) 1545 can be connected to the bus 1556). For example, the external sensing devices 1544 may include sensors gathering data before-during-after of the collected time-series data of the machine. The computer 1511 may be connected to other external computers 1542. An output interface 1509 may be used to output the processed data from the processor 1540. It is noted that a user interface 1549 in communication with the processor 1540 and the non-transitory computer readable storage medium 1512, acquires and stores the region data in the non-transitory computer readable storage medium 1512 upon receiving an input from a surface 1552 of the user interface 1549 by a user. Further, a controller 1561 can be connected to the bus 1556, to control devices associated with the embodiments of the systems and methods of the present disclosure.

An exemplary data processing system can be implemented with the embodiments of the present disclosure. For example, a system can be configured by software or otherwise to perform processes as described herein, and in particular as each one of a plurality of interconnected and communicating systems as described herein. The data processing system illustrated can include a processor connected to a level two cache/bridge, which is connected in turn to a local system bus. The local system bus may be, for example, a peripheral component interconnects (PCI) architecture bus. Also connected to local system bus in the illustrated example are a main memory and a graphics adapter that can be connected to display. Other peripherals, can include a local area network (LAN)/Wide Area Network/Wireless (e.g. Wi-Fi) adapter connected to local system bus. The LAN/WAN/Wireless adapter can be connected to a network (not a part of data processing system), which can be any public or private data processing system network or combination of networks, as known to those of skill in the art, including the Internet. Data processing system can communicate over network with server system, which is also not part of data processing system, but can be implemented, for example, as a separate data processing system. An expansion bus interface can be connected to the local system bus to an input/output (I/O) bus. I/O bus can be connected to keyboard/mouse adapter, disk controller, and I/O adapter. The disk controller can be connected to a storage, including but not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices. Also connected to I/O bus can be an audio adapter. Keyboard/mouse adapter can provide a connection for a pointing device (not shown), such as a mouse, trackball, track pointer, etc.

Still referring to FIG. 15A, the data processing system in accordance with an embodiment of the present disclosure can include an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

FIG. 15B is a block diagram illustrating some components of a data processing system used for implementing some methods, according to some embodiments of the present disclosure.

For example, data processing system 1500B can include a hardware processor 1571 in communication with a sensor 1572 or sensors, that collects data including data of an environment 1573. The sensor data can include data related to robot, vehicle, machine, etc. and similar types of data or data associated with trajectory optimization techniques for dynamical systems with nonlinear constraints. Further, the sensor 1572 can convert a video or camera input into the signal data. The hardware processor 1571 can be in communication with a computer storage memory, i.e. memory 1579, such that the memory 1579 includes stored data, including algorithms, instructions and other data, that can be implemented by the hardware processor 1571. For example, stored in the memory can include a multi-link Dynamic Model, a nonlinear Optimization program and an objective function.

Still referring to FIG. 15B, sensor data can be stored in the memory 1579 which can be obtained from at least one sensor in the environment via a wired connection or a wireless connection, the sensor data is stored in the memory via a transceiver configured to output data and to receive data, such that after each time interval, the sensor data is updated by the at least one sensor. Also, stored in the memory can be robot, vehicle and machine operational and dynamics data that can include robot arm information including a model of the robot arm that allows for simulation of movements of the robot arm, along with operational control inputs such as torques applied by the motors via the robot drive for moving each joint of the robot arm. It is possible software 1597 can be stored in the memory 1579, such as multi-link dynamic model(s), nonlinear optimization program(s), or objective function(s). The data stored can include robot, vehicle, machine, etc. or similar types of data or data associated with trajectory optimization techniques for dynamical systems with nonlinear constraints.

Optionally, the hardware processor 1571 can be connected to a network 1577, that is in communication with a data source(s) 1598, computer device 1584, a mobile phone device 1585 and a storage device 1586. Also optionally, the hardware processor 1571 can be connected via the network 1577 to a network-enabled server (not shown) that is connected to a client device (not shown). The hardware processor 1571 can optionally be connected to an external memory device 1591, a transmitter 1592 to a controller 1594. A transceiver can be connected via an expansion bus interface 1595 to the hardware processor 1571. Some types of output received by the transceiver 1596 can be related to a user's intended interested in receiving an answer to a request (received by the transceiver 1596) about computed trajectories along the path (obtained from the methods of the present disclosure) which could be displayed on the user's one or more display device, such as a monitor or screen, and/or inputted into an other computer related device for further analysis, etc.

Still referring to FIG. 15B, contemplated is that the hardware processor 1571 can include two or more hardware processors depending upon the requirements of the specific application, wherein the processors can be either internal or external. Certainly, other components may be incorporated.

It is possible the network 1577 can include, by non-limiting example, one or more local area networks (LANs) and/or wide area networks (WANs). Wherein the networking environments can be similar to enterprise-wide computer networks, intranets and the Internet. Contemplated for all the components mentioned that there can be any number of client devices, storage components, and data sources employed within the systems of the present disclosure. Each may comprise a single device or multiple devices cooperating in a distributed environment. Further, the data source(s) 1583 may comprise data resources for training a network. For example, in an embodiment, training data can be stored in the storage 1586. The training data can also include signals of other environments. Data source(s) 1583 may also comprise data resources for training a network. The data provided by data source(s) 1583 may include other data, such as other sensor related data corresponding to the environment, robot arm and the like.

Still referring to FIG. 15B, some data in data source(s) 1583 can be provided by one or more feedback loops. Other examples of data sources may include by way of example, and not limitation, various sources including streaming video, web queries, mobile device camera or other information, web cam feeds, smart-glasses and smart-watch feeds, customer care systems, security camera feeds, web documents, catalogs, user feeds, SMS logs, instant messaging logs, spoken-word transcripts, gaming system user interactions such as voice commands or data (e.g., data can include robot, vehicle, environmental, etc. types of data or data associated with trajectory optimization techniques for dynamical systems with nonlinear constraints). Specific data source(s) 1583 used may be determined based on the application including whether the data is a certain class of data (e.g., data relating to thresholds, performance, safety, etc. associated with robot, vehicle, environmental, etc. types of data or data associated with trajectory optimization techniques for dynamical systems with nonlinear constraints), or general (non-class-specific) in nature.

The third party devices 1584, 1585, which can comprise of any type of computing device including a computer device 1584 or a mobile device 1585. Contemplated is that a user device may be embodied as a personal data assistant (PDA), a mobile device, such as a smartphone, smart watch, smart glasses (or other wearable smart device), augmented reality headset, virtual reality headset. Further, the user device could be a laptop, such as a tablet, remote control, entertainment system, vehicle computer system, embedded system controller, appliance, home computer system, security system, consumer electronic device, or other similar electronics device. In one embodiment, the client device is capable of receiving input data such as audio and information usable by methods and systems of the present disclosure. For example, the third party device may be data i.e. data that is associated with robot, vehicle, environmental, etc. or similar types of data or data associated with trajectory optimization techniques for dynamical systems with nonlinear constraints), a microphone or line-in for receiving audio information, a camera for receiving video or image information, or a communication component (e.g., Wi-Fi functionality) for receiving such information from another source, such as the Internet or a data source 1583.

Still referring to FIG. 15B, regarding the storage 1586, the storage 1586 can store information including data, computer instructions (e.g., software program instructions, routines, or services), and/or models used in embodiments of the technology described herein. For example, the storage 1586 can store data from one or more data source(s) 1583, one or more deep neural network models, information for generating and training deep neural network models, and the computer-usable information outputted by one or more deep neural network models.

FIG. 16A shows a block diagram of another system 1699 for controlling a vehicle according to some embodiments of the present disclosure. The vehicle can be any type of system intended to be executed autonomously or semi-autonomously. The system can include a human operator 1610, and in such a case the system is semi-autonomous and includes possibilities of overriding and allowing, respectively, the action of the driver 1610. As one example, the system 1600 can be a four-wheel passenger vehicle or car. Another example of a possible system is a differential-drive mobile robot. A third example is an industrial robot manipulator or robot associated with a cart or moving device. In the detailed description, an automotive vehicle will be used throughout to illustrate the present disclosure.

The vehicle 1600 includes at least one sensor 1620 that senses the environment in vicinity of the vehicle. The sensor could be of several types. For example, the sensor can be a video camera that gives sequence of camera images of the environment, or it can be a LIDAR, which gives three-dimensional points of the environment captured by the LIDAR scanner. The sensor setup can also be a combination of different sensors. For example, the video camera can be combined with a global positioning system (GPS) that gives information of position of the camera and/or origin of the sequence of images acquired by the camera.

Still referring to FIG. 16, alternatively, the camera and GPS can be combined with an accelerometer, which combined with the two sensors can give velocity and acceleration information associated with the image sequence. One sensor can be an inertial measurement unit (IMU). For example, the IMU can include 3-axis accelerometer(s), 3-axis gyroscope(s), and/or magnetometer(s). The IMU can provide velocity, orientation, and/or other position related information. Over the course of time, the sensor provides a sensor signal 1621 to a motion path-planning system 1630.

The system 1699 also includes a memory 1640 storing at least one neural network. The neural network stored in the memory 1640 is trained to map time-series signals 1631 to future predicted trajectories of the vehicle. Additionally, or alternatively, in one embodiment, the memory 1640 stores a set of neural networks, each neural network in the set is trained to consider different driving styles for mapping the time-series signals to reference trajectories of the vehicle.

Still referring to FIG. 16, for example, the system 1699 can determine a driving style for controlling the vehicle and select 1641 from the memory the neural network corresponding to the determined driving style. For example, the driving style can be determined based on an input from a user of the vehicle. Additionally, or alternatively, when the vehicle is a semi-autonomous vehicle, the driving style of a driver of the vehicle can be learned while the vehicle is driven in a manual mode. Additionally, or alternatively, the system 1699 can select the neural network based on the time-series signals 1631 itself. For example, for different driving situations, for example, given by an external input 1610, different neural networks are selected 1641.

The motion path-planning system 1630 takes a sequence of sensor signals 1621 and produces a time-series signal 1631. The memory 1640 provides a neural network 1641 to the motion path-planning system 1630, which determines a reference trajectory 1632. In addition, a desired waypoint, i.e., an intermediate desired position, can also be given to the neural network, in addition to the sensor inputs. The waypoint has the purpose of guide the chosen trajectory to a desired path. In another embodiment, the waypoints are also given for the purpose of training the network. In various embodiments, the reference trajectory 1632 can be represented as one or combination of a sequence of Cartesian coordinates with a time associated to each coordinate, a sequence of positions and velocities of the vehicle, and a sequence of headings of the vehicle.

Still referring to FIG. 16, the system 1699 can also include a set of controllers 1650 for determining a set of control references 1651 for tracking the reference trajectory 1632. The set of control references are sent to the actuators 1660 of the vehicle for execution. For example, in case of unforeseen and/or unmodeled effects, for example due to uncertainties in the environment 1670 or the sensors 1620, or finite precision in the neural network 1641, the motion trajectory 1601 of the vehicle can be slightly different from the reference trajectory 1632. However, the controllers 1650 ensure that the motion trajectory 1601 is close, with bounded error, to the reference trajectory 1632. For example, the controllers 1650 can include a failure-mode controller, which acts as a security layer for when either the trajectory 1632 or the other controllers in 1650 fail.

FIG. 16B is a block diagram illustrating some components used for the motion path-planning system and some vehicle controllers of a vehicle, according to some embodiments of the present disclosure. For example, the controllers 1650 of the vehicle are steering 1691 and brake/throttle controllers 1692 that control different entities associated with the motion of the vehicle. For example, the steering control 1691 can map a reference trajectory from the motion path-planning system 1630 to a motion trajectory of a vehicle, which includes a sequence of angles of the steering wheel of the vehicle. For example, the brake control module 1692 can map a reference trajectory of the velocity to a brake pressure and engine throttle command trajectory of the vehicle.

FIG. 16C is a block diagram illustrating some components of an interior of a vehicle, according to some embodiments of the present disclosure. The vehicle can include a human operator that access buttons 1681, 1682, 1683 associated with the steering wheel 1685 or buttons on the dashboard 1686 of the vehicle. The dashboard 1686 includes the steering wheel 1685 with which the human operator can drive the vehicle and a display 1687 for showing different modes, such as velocity and sensor outputs, or other information of the vehicle. The human operator, or another user of the vehicle, can also choose to input commands or information 1688.

**Embodiments**

The following description provides exemplary embodiments only, and is not intended to limit the scope, applicability, or configuration of the disclosure. Rather, the following description of the exemplary embodiments will provide those skilled in the art with an enabling description for implementing one or more exemplary embodiments. Specific details are given in the following description to provide a thorough understanding of the embodiments. However, understood by one of ordinary skill in the art can be that the embodiments may be practiced without these specific details. For example, systems, processes, and other elements in the subject matter disclosed may be shown as components in block diagram form in order not to obscure the embodiments in unnecessary detail. In other instances, well-known processes, structures, and techniques may be shown without unnecessary detail in order to avoid obscuring the embodiments. Further, like reference numbers and designations in the various drawings indicated like elements. Also, individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process may be terminated when its operations are completed, but may have additional steps not discussed or included in a figure. Furthermore, not all operations in any particularly described process may occur in all embodiments. A process may correspond to a method, a function, a procedure, a subroutine, a subprogram, etc. When a process corresponds to a function, the function's termination can correspond to a return of the function to the calling function or the main function.

Furthermore, embodiments of the subject matter disclosed may be implemented, at least in part, either manually or automatically. Manual or automatic implementations may be executed, or at least assisted, through the use of machines, hardware, software, firmware, middleware, microcode, hardware description languages, or any combination thereof. When implemented in software, firmware, middleware or microcode, the program code or code segments to perform the necessary tasks may be stored in a machine readable medium. A processor(s) may perform the necessary tasks.

Further, embodiments of the present disclosure and the functional operations described in this specification can be implemented in digital electronic circuitry, in tangibly-embodied computer software or firmware, in computer hardware, including the structures disclosed in this specification and their structural equivalents, or in combinations of one or more of them. Further some embodiments of the present disclosure can be implemented as one or more computer programs, i.e., one or more modules of computer program instructions encoded on a tangible non transitory program carrier for execution by, or to control the operation of, data processing apparatus. Further still, program instructions can be encoded on an artificially generated propagated signal, e.g., a machine-generated electrical, optical, or electromagnetic signal, that is generated to encode information for transmission to suitable receiver apparatus for execution by a data processing apparatus. The computer storage medium can be a machine-readable storage device, a machine-readable storage substrate, a random or serial access memory device, or a combination of one or more of them.

According to embodiments of the present disclosure the term "data processing apparatus" can encompass all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network. Computers suitable for the execution of a computer program include, by way of example, can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

**Claims**

1. A computing system comprising:
   a processor and an accessible memory, the computing system configured to:

   receive inputs including sensor data, vehicle operation and dynamics, VOD, data, a vehicle dynamic, VD, model, a nonlinear optimization, NLO, program, and an objective function;
   determine trajectories including a path with a starting pose and an ending pose over a sequence of time intervals while satisfying dynamic constraints and geometric constraints on a vehicle (1600), the vehicle (1600) having a motor and a steering drive system for directing the vehicle (1600) along the path, wherein the determination of trajectories includes:

   determining the dynamic constraints based on dynamics of the vehicle operation and dynamics, VOD, from the VOD data, and determine the geometric constraints as a first-order differentiable function by generating a coordinate grid of an environment from the sensor data, to determine Cartesian coordinates of at least one obstacle (201) and end-points of the vehicle (1600); and
   using the VD model to formulate the NLO program for the vehicle (1600), the NLO program uses as inputs the starting and ending pose, the dynamic and geometric constraints, to optimize the objective function of the trajectories while satisfying the dynamic and geometric constraints and vehicle operating constraints, for each time interval in the sequence of time intervals, so that the trajectories move the vehicle (1600) from the starting pose to the ending pose;

and the computing system is further configured to:
control the motor of the vehicle (1600) and the vehicle steering drive system to move the vehicle (1600) based upon the optimized trajectories obtained from the NLO program, wherein the geometric constraints are determined by a parameterization of the vehicle (1600) by end-points of the vehicle (1600), wherein the end-points of the vehicle (1600) are defined so that any point on the vehicle (1600) can be obtained by using a convex combination of the end-points, and then finding a minimum of a distance of a parameterized position on the vehicle (1600) from each of the at least one obstacle (201) in the environment and requiring that the minimum distance is above the radius (R) of the smallest sphere circumscribing the obstacle (201), wherein the distance is calculated from the center of the smallest sphere circumscribing each obstacle (201).

2. A computer-implemented method for determining trajectories including a path and corresponding control inputs associated with a starting pose and an ending pose, the path to be traversed by a vehicle (1600) over a sequence of time intervals, while satisfying dynamic constraints and geometric constraints on the vehicle (1600), the vehicle (1600) having a motor and a steering drive system for directing the vehicle (1600) along the path, comprising:

determining the dynamic constraints based on dynamics of the vehicle (1600) that includes different masses, geometry and moment of inertia tensor from vehicle operation and dynamics, VOD, data stored in a memory, and determine the geometric constraints as a first-order differentiable function by generating a coordinate grid of the environment from sensor data stored in the memory, to determine Cartesian coordinates of at least one obstacle (201) and end-points of the vehicle (1600);
using a vehicle dynamic, VD, model to formulate a non-linear optimization, NLO, program for the vehicle (1600), the NLO program uses as inputs the starting and ending pose, the dynamic and geometric constraints, to optimize an objective function of the trajectories while satisfying the dynamic and geometric constraints and vehicle operating constraints, for each time interval in the sequence of time intervals, so that the trajectories move the vehicle (1600) from the starting pose to the ending pose; and
control the motor of the vehicle (1600) and the vehicle steering drive system to move the vehicle (1600) based upon the optimized trajectories obtained from the NLO program, wherein the geometric constraints are determined by a parameterization of the vehicle (1600) by end-points of the vehicle (1600), wherein the end-points of the vehicle (1600) are defined so that any point on the vehicle (1600) can be obtained by using a convex combination of the end-points, and then finding a minimum of a distance of a parameterized position on the vehicle (1600) from each of the at least one obstacle (201) in the environment and requiring that the minimum distance is above the radius (R) of the smallest sphere circumscribing the obstacle (201), wherein the distance is calculated from the center of the smallest sphere circumscribing each obstacle (201).

3. A non-transitory computer-readable medium encoded with executable instructions that, when executed, cause one or more data processing systems to:

receive inputs including sensor data, vehicle operation and dynamics, VOD, a vehicle dynamic, VD, model, a nonlinear optimization, NLO, program and an objective function;
determine trajectories including a path with a starting pose and an ending pose over a sequence of time intervals while satisfying dynamic constraints and geometric constraints on a vehicle (1600), the vehicle (1600) having a motor and a steering drive system for moving and directing the vehicle (1600) along the path, wherein the determination of trajectories includes:

determining the dynamic constraints based on dynamics of the vehicle (1600) from the VOD data, and determine the geometric constraints as a first-order differentiable function by generating a coordinate grid of an environment from the sensor data, to determine Cartesian coordinates of at least one obstacle (201) and end-points of the vehicle (1600); and
using the VD model to formulate the NLO program for the vehicle (1600), the NLO program uses as inputs the starting and ending pose, the dynamic and geometric constraints, to optimize the objective function of the trajectories while satisfying the dynamic and geometric constraints and the vehicle operating constraints, for each time interval in the sequence of time intervals, so that the trajectories move the vehicle (1600) from the starting pose to the ending pose;
and the executable instructions, when executed, further cause the one or more data processing systems to control the motor of the vehicle (1600) and the vehicle steering drive system to move the vehicle (1600) based upon the optimized trajectories obtained from the NLO program, wherein the geometric constraints are determined by a parameterization of the vehicle (1600) by end-points of the vehicle (1600), wherein the end-points of the vehicle (1600) are defined so that any point on the vehicle (1600) can be obtained by using a convex combination of the end-points, and then finding a minimum of a distance of a parameterized position on the vehicle (1600) from each of the at least one obstacle (201) in the environment and requiring that the minimum distance is above the radius (R) of the smallest sphere circumscribing the obstacle (201), wherein the distance is calculated from the center of the smallest sphere circumscribing each obstacle (201).

4. A vehicle system comprising the computing system of claim 1.

**Patentansprüche**

1. Berechnungssystem, umfassend:
   einen Prozessor und einen zugänglichen Speicher, wobei das Berechnungssystem eingerichtet ist zum:

   Empfangen von Eingaben, aufweisend Sensordaten, Daten zum Fahrzeugbetrieb und zur Dynamik, VOD, ein Modell zur Fahrzeugdynamik, VD, ein Programm zur nichtlinearen Optimierung, NLO, und eine Zielfunktion;
   Bestimmen von Trajektorien, die einen Pfad mit einer Startpose und einer Endpose über eine Sequenz von Zeitintervallen umfassen, während dynamische Beschränkungen und geometrische Beschränkungen eines Fahrzeugs (1600) erfüllt werden, wobei das Fahrzeug (1600) einen Motor und ein Lenkantriebssystem zum Leiten des Fahrzeugs (1600) entlang des Pfades aufweist, wobei die Bestimmung von Trajektorien umfasst:

   Bestimmen der dynamischen Beschränkungen basierend auf der Dynamik des Fahrzeugbetriebs und der Dynamik, VOD, aus den VOD-Daten, und Bestimmen der geometrischen Beschränkungen als eine differenzierbare Funktion erster Ordnung durch Erzeugen eines Koordinatengitters einer Umgebung aus den Sensordaten, um kartesische Koordinaten von mindestens einem Hindernis (201) und Endpunkten des Fahrzeugs (1600) zu bestimmen; und
   Verwenden des VD-Modells, um das NLO-Programm für das Fahrzeug (1600) zu formulieren, wobei das NLO-Programm als Eingaben die Start- und Endpose, die dynamischen und geometrischen Beschränkungen verwendet, um die Zielfunktion der Trajektorien zu optimieren, während die dynamischen und geometrischen Beschränkungen und die Beschränkungen für das Betreiben des Fahrzeugs für jedes Zeitintervall in der Sequenz von Zeitintervallen erfüllt werden, so dass die Trajektorien das Fahrzeug (1600) von der Startpose zur Endpose bewegen;
   und das Berechnungssystem ferner eingerichtet ist zum:
   Steuern des Motors des Fahrzeugs (1600) und des Fahrzeuglenkungsantriebssystems, um das Fahrzeug (1600) auf der Grundlage der aus dem NLO-Programm erhaltenen optimierten Trajektorien zu bewegen, wobei die geometrischen Beschränkungen durch eine Parametrisierung des Fahrzeugs (1600) durch Endpunkte des Fahrzeugs (1600) bestimmt werden, wobei die Endpunkte des Fahrzeugs (1600) so definiert sind, dass jeder Punkt auf dem Fahrzeug (1600) durch Verwendung einer konvexen Kombination der Endpunkte erhalten werden kann und dann ein Minimum eines Abstands einer parametrisierten Position auf dem Fahrzeug (1600) von jedem des mindestens einen Hindernisses (201) in der Umgebung gefunden wird und verlangt wird, dass der minimale Abstand oberhalb des Radius (R) der kleinsten Kugel liegt, die das Hindernis (201) umschreibt, wobei der Abstand vom Mittelpunkt der kleinsten, jedes Hindernis umschreibenden Kugel (201) aus berechnet wird.

2. Computer-implementiertes Verfahren zum Bestimmen von Trajektorien, die einen Pfad und entsprechende Steuereingänge aufweisen, die mit einer Startpose und einer Endpose verknüpft sind, wobei der Pfad von einem Fahrzeug (1600) über eine Sequenz von Zeitintervallen durchlaufen werden soll, während dynamische Beschränkungen und geometrische Beschränkungen für das Fahrzeug (1600) erfüllt werden, wobei das Fahrzeug (1600) einen Motor und ein Lenkantriebssystem zum Leiten des Fahrzeugs (1600) entlang des Pfades aufweist, umfassend:

   Bestimmen der dynamischen Beschränkungen auf der Grundlage der Dynamik des Fahrzeugs (1600), die verschiedene Massen, Geometrie und ein Moment eines Trägheitstensors aus den in einem Speicher gespeicherten Daten zum Fahrzeugbetrieb und zur Dynamik, VOD, umfasst, und Bestimmen der geometrischen Beschränkungen als eine differenzierbare Funktion erster Ordnung durch Erzeugen eines Koordinatengitters der Umgebung aus den im Speicher gespeicherten Sensordaten, um kartesische Koordinaten von mindestens einem Hindernis (201) und Endpunkten des Fahrzeugs (1600) zu bestimmen;
   Verwenden eines Modells der Fahrzeugdynamik, VD, um ein Programm zur nichtlinearen Optimierung, NLO, für das Fahrzeug (1600) zu formulieren, wobei das NLO-Programm als Eingaben die Start- und Endpose, die dynamischen und geometrischen Beschränkungen verwendet, um eine Zielfunktion der Trajektorien zu optimieren, während die dynamischen und geometrischen Beschränkungen und die Beschränkungen für das Betreiben des Fahrzeugs für jedes Zeitintervall in der Sequenz von Zeitintervallen erfüllt werden, so dass die Trajektorien das Fahrzeug (1600) von der Startpose zur Endpose bewegen; und

Steuern des Motors des Fahrzeugs (1600) und des Fahrzeuglenkungsantriebssystems, um das Fahrzeug (1600) auf der Grundlage der aus dem NLO-Programm erhaltenen optimierten Trajektorien zu bewegen, wobei die geometrischen Beschränkungen durch eine Parametrisierung des Fahrzeugs (1600) durch Endpunkte des Fahrzeugs (1600) bestimmt werden, wobei die Endpunkte des Fahrzeugs (1600) so definiert sind, dass jeder Punkt auf dem Fahrzeug (1600) durch Verwendung einer konvexen Kombination der Endpunkte erhalten werden kann und dann ein Minimum eines Abstands einer parametrisierten Position auf dem Fahrzeug (1600) von jedem des mindestens einen Hindernisses (201) in der Umgebung gefunden wird und verlangt wird, dass der minimale Abstand oberhalb des Radius (R) der kleinsten Kugel liegt, die das Hindernis (201) umschreibt, wobei der Abstand vom Mittelpunkt der kleinsten, jedes Hindernis umschreibenden Kugel (201) aus berechnet wird.

3. Nicht-transitorisches, computerlesbares Medium, das mit ausführbaren Anweisungen kodiert ist, die, wenn sie ausgeführt werden, ein oder mehrere Datenverarbeitungssysteme veranlassen zum:

Empfangen von Eingaben, aufweisend Sensordaten, Fahrzeugbetrieb und Dynamik, VOD, ein Modell zur Fahrzeugdynamik, VD, ein Programm zur nichtlinearen Optimierung, NLO, und eine Zielfunktion;

Bestimmen von Trajektorien, die einen Pfad mit einer Startpose und einer Endpose über eine Sequenz von Zeitintervallen umfassen, während dynamische Beschränkungen und geometrische Beschränkungen eines Fahrzeugs (1600) erfüllt werden, wobei das Fahrzeug (1600) einen Motor und ein Lenkantriebssystem zum Bewegen und Leiten des Fahrzeugs (1600) entlang des Pfades aufweist, wobei die Bestimmung von Trajektorien umfasst:

Bestimmen der dynamischen Beschränkungen basierend auf der Dynamik des Fahrzeugs (1600) aus den VOD-Daten, und Bestimmen der geometrischen Beschränkungen als eine differenzierbare Funktion erster Ordnung durch Erzeugen eines Koordinatengitters einer Umgebung aus den Sensordaten, um kartesische Koordinaten von mindestens einem Hindernis (201) und Endpunkten des Fahrzeugs (1600) zu bestimmen; und

Verwenden des VD-Modells, um das NLO-Programm für das Fahrzeug (1600) zu formulieren, wobei das NLO-Programm als Eingaben die Start- und Endpose, die dynamischen und geometrischen Beschränkungen verwendet, um die Zielfunktion der Trajektorien zu optimieren, während die dynamischen und geometrischen Beschränkungen und die Beschränkungen für das Betreiben des Fahrzeugs für jedes Zeitintervall in der Sequenz von Zeitintervallen erfüllt werden, so dass die Trajektorien das Fahrzeug (1600) von der Startpose zur Endpose bewegen;

und wobei die ausführbaren Anweisungen, wenn sie ausgeführt werden, ferner ein oder mehrere Datenverarbeitungssysteme veranlassen zum

Steuern des Motors des Fahrzeugs (1600) und des Fahrzeuglenkungsantriebssystems, um das Fahrzeug (1600) auf der Grundlage der aus dem NLO-Programm erhaltenen optimierten Trajektorien zu bewegen, wobei die geometrischen Beschränkungen durch eine Parametrisierung des Fahrzeugs (1600) durch Endpunkte des Fahrzeugs (1600) bestimmt werden, wobei die Endpunkte des Fahrzeugs (1600) so definiert sind, dass jeder Punkt auf dem Fahrzeug (1600) durch Verwendung einer konvexen Kombination der Endpunkte erhalten werden kann und dann ein Minimum eines Abstands einer parametrisierten Position auf dem Fahrzeug (1600) von jedem des mindestens einen Hindernisses (201) in der Umgebung gefunden wird und verlangt wird, dass der minimale Abstand oberhalb des Radius (R) der kleinsten Kugel liegt, die das Hindernis (201) umschreibt, wobei der Abstand vom Mittelpunkt der kleinsten, jedes Hindernis umschreibenden Kugel (201) aus berechnet wird.

4. Fahrzeugsystem, umfassend das Berechnungssystem nach Anspruch 1.

**Revendications**

1. Système informatique comprenant :
un processeur et une mémoire accessible, le système informatique étant configuré pour :

recevoir des entrées comprenant des données de capteur, des données de fonctionnement et de dynamique du véhicule, VOD, un modèle de véhicule dynamique, VD, un programme d'optimisation non linéaire, NLO, et une fonction objective ;

déterminer des trajectoires comprenant un trajet avec une pose initiale et une pose finale sur une séquence d'intervalles de temps tout en satisfaisant aux contraintes dynamiques et contraintes géométriques sur un véhicule (1600), le véhicule (1600) ayant un moteur et un système d'entraînement de direction pour diriger le véhicule (1600) le long du trajet, dans lequel la détermination de trajectoires comprend :

la détermination des contraintes dynamiques sur la base de la dynamique du fonctionnement et de la dynamique du véhicule, VOD, à partir des données VOD, et la détermination des contraintes géométriques sous la forme d'une fonction différenciable de premier ordre par génération d'une grille de coordonnées d'un environnement à partir des données de capteur, pour déterminer des coordonnées cartésiennes d'au moins un obstacle (201) et des points d'extrémité du véhicule (1600) ; et

l'utilisation du modèle VD pour formuler le programme NLO pour le véhicule (1600), le programme NLO utilisant en tant qu'entrées les poses initiale et finale, les contraintes dynamiques et géométriques, pour optimiser la fonction objective des trajectoires tout en satisfaisant aux contraintes dynamiques et géométriques et aux contraintes de fonctionnement du véhicule, pour chaque intervalle de temps dans la séquence d'intervalles de temps, de sorte que les trajectoires déplacent le véhicule (1600) de la pose initiale à la pose finale ;

et le système informatique est en outre configuré pour :

commander le moteur du véhicule (1600) et le système d'entraînement de direction du véhicule pour déplacer le véhicule (1600) sur la base des trajectoires optimisées obtenues à partir du programme NLO, dans lequel les contraintes géométriques sont déterminées par un paramétrage du véhicule (1600) par des points d'extrémité du véhicule (1600), dans lequel les points d'extrémité du véhicule (1600) sont définis de sorte qu'un point quelconque sur le véhicule (1600) peut être obtenu en utilisant une combinaison convexe des points d'extrémité, et ensuite en trouvant un minimum d'une distance d'une position paramétrée sur le véhicule (1600) par rapport à chacun de l'au moins un obstacle (201) dans l'environnement et nécessitant que la distance minimale soit supérieure au rayon (R) de la plus petite sphère délimitant l'obstacle (201), dans lequel la distance est calculée à partir du centre de la plus petite sphère délimitant chaque obstacle (201).

2. Procédé mis en oeuvre par ordinateur pour déterminer des trajectoires comprenant un trajet et des entrées de commande correspondantes associés à une pose initiale et une pose finale, au trajet devant être parcouru par un véhicule (1600) sur une séquence d'intervalles de temps, tout en satisfaisant à des contraintes dynamiques et des contraintes géométriques sur le véhicule (1600), le véhicule (1600) ayant un moteur et un système d'entraînement de direction pour diriger le véhicule (1600) le long du trajet, comprenant :

la détermination des contraintes dynamiques sur la base de la dynamique du véhicule (1600) qui comprend des masses, une géométrie et un tenseur de moment d'inertie divers à partir de données de fonctionnement et de dynamique du véhicule, VOD, stockées dans une mémoire, et la détermination des contraintes géométriques sous la forme d'une fonction différenciable de premier ordre par génération d'une grille de coordonnées de l'environnement à partir de données de capteur stockées dans la mémoire, pour déterminer des coordonnées cartésiennes d'au moins un obstacle (201) et des points d'extrémité du véhicule (1600) ;

l'utilisation d'un modèle de véhicule dynamique, VD pour formuler un programme d'optimisation non linéaire, NLO, pour le véhicule (1600), le programme NLO utilisant en tant qu'entrées les poses initiale et finale, les contraintes dynamiques et géométriques, pour optimiser une fonction objective des trajectoires tout en satisfaisant aux contraintes dynamiques et géométriques et aux contraintes de fonctionnement du véhicule, pour chaque intervalle de temps dans la séquence d'intervalles de temps, de sorte que les trajectoires déplacent le véhicule (1600) de la pose initiale à la pose finale ; et

la commande du moteur du véhicule (1600) et du système d'entraînement de direction du véhicule pour déplacer le véhicule (1600) sur la base des trajectoires optimisées obtenues à partir du programme NLO, dans lequel les contraintes géométriques sont déterminées par un paramétrage du véhicule (1600) par des points d'extrémité du véhicule (1600), dans lequel les points d'extrémité du véhicule (1600) sont définis de sorte qu'un point quelconque sur le véhicule (1600) peut être obtenu en utilisant une combinaison convexe des points d'extrémité, et ensuite en trouvant un minimum d'une distance d'une position paramétrée sur le véhicule (1600) par rapport à chacun de l'au moins un obstacle (201) dans l'environnement et nécessitant que la distance minimale soit supérieure au rayon (R) de la plus petite sphère délimitant l'obstacle (201), dans lequel la distance est calculée à partir du centre de la plus petite sphère délimitant chaque obstacle (201).

**3.** Support lisible par ordinateur non transitoire codé avec des instructions exécutables qui, lorsqu'elles sont exécutées, amènent un ou plusieurs systèmes de traitement de données à :

recevoir des entrées comprenant des données de capteur, des données de fonctionnement et de dynamique du véhicule, VOD, un modèle de véhicule dynamique, VD, un programme d'optimisation non linéaire, NLO, et une fonction objective ;
déterminer des trajectoires comprenant un trajet avec une pose initiale et une pose finale sur une séquence d'intervalles de temps tout en satisfaisant aux contraintes dynamiques et contraintes géométriques sur un véhicule (1600), le véhicule (1600) ayant un moteur et un système d'entraînement de direction pour diriger le véhicule (1600) le long du trajet, dans lequel la détermination de trajectoires comprend :

la détermination des contraintes dynamiques sur la base de la dynamique du fonctionnement et de la dynamique du véhicule (1600), VOD, à partir des données VOD, et détermine les contraintes géométriques sous la forme d'une fonction différenciable de premier ordre par génération d'une grille de coordonnées d'un environnement à partir des données de capteur, pour déterminer des coordonnées cartésiennes d'au moins un obstacle (201) et des points d'extrémité du véhicule (1600) ; et
l'utilisation du modèle VD pour formuler le programme NLO pour le véhicule (1600), le programme NLO utilisant en tant qu'entrées les poses initiale et finale, les contraintes dynamiques et géométriques, pour optimiser la fonction objective des trajectoires tout en satisfaisant aux contraintes dynamiques et géométriques et aux contraintes de fonctionnement du véhicule, pour chaque intervalle de temps dans la séquence d'intervalles de temps, de sorte que les trajectoires déplacent le véhicule (1600) de la pose initiale à la pose finale ;
et les instructions exécutables, lorsqu'elles sont exécutées, amènent en outre un ou plusieurs systèmes de traitement de données pour
commander le moteur du véhicule (1600) et le système d'entraînement de direction du véhicule pour déplacer le véhicule (1600) sur la base des trajectoires optimisées obtenues à partir du programme NLO, dans lequel les contraintes géométriques sont déterminées par un paramétrage du véhicule (1600) par des points d'extrémité du véhicule (1600), dans lequel les points d'extrémité du véhicule (1600) sont définis de sorte qu'un point quelconque sur le véhicule (1600) peut être obtenu en utilisant une combinaison convexe des points d'extrémité, et en trouvant ensuite un minimum d'une distance d'une position paramétrée sur le véhicule (1600) par rapport à chacun de l'au moins un obstacle (201) dans l'environnement et en exigeant que la distance minimale soit supérieure au rayon (R) de la plus petite sphère délimitant l'obstacle (201), dans lequel la distance est calculée par rapport au centre de la plus petite sphère délimitant chaque obstacle (201).

**4.** Système de véhicule comprenant le système informatique selon la revendication 1.

**FIG.1A**

EP 3 880 413 B1

Receive inputs - sensor data, robot operation & dynamics data (ROD), a multi-link dynamic model (MLD) and a nonlinear optimization (NOP) program
⤷ 115

↙ 100A

Determine trajectories including a path with a starting pose and an ending pose over time intervals satisfying dynamic and geometric constraints on the robot arm
⤷ 120

Determining dynamic constraints based on dynamics of each link, each link dynamics include different masses, geometry & moment of inertia tensor via ROD
⤷ 125

Determine geometric constraints as a first-order differentiable function by generating a coordinate grid of an environment via sensor data, to determine Cartesian coordinates of an obstacle and end-points of each link
⤷ 130

use MLDM to formulate NOP for robot arm, the NOP uses as inputs the starting pose & ending pose, the dynamic & geometric constraints, to optimize objective function of the trajectories while satisfying the dynamic & geometric constraints and operating constraints, for each time interval in sequence of time intervals
⤷ 135

FIG.1B

Robotic Device ⌐150
160

**Mechanical System**

Robot Arm
⌐161

Gripper
⌐163

Base for Gripper
⌐165

170

**Sensor(s)**

Environment Sensor
⌐171

Position sensor
⌐173

Velocity sensor
⌐174

180

**Control System**

Data Processing System
⌐181

Power Supply ⌐195

193⌐ Network

EP 3 880 413 B1

FIG.1C  *(Step 135 of FIG. 1A further defined)*

Discretize the dynamics of the MLDM using an integration method (such as explicit Euler, implicit Euler etc.) to obtain a set of nonlinear algebraic constraints describing the evolution over time of the robot arm **131**

Include additional algebraic constraints modeling the position of the ends of each of the link-arms in the multi-link robot such that the set of convex combination of the end points **132**

Circumscribe the obstacles using a sphere. **133**

Impose the geometric constraint by requiring that the minimum distance between the convex combination of the end points of the robot arms and the obstacles is larger than the radius of the sphere. **134**

Solve the nonlinear optimization program (NOP) consisting of the discretize dynamics of the MLDM, algebraic constraints modeling the position of the ends of each of the link-arms, the geometric constraints, bounds on the robotic actuators. **136**

FIG.1D

Trajectory Controller — 149

- Sensor Data — 141
- Constraints — 143
- Objective function — 145

142 — Trajectory Generator
144
146 — Control Module
151
152 — Motor Controller
153
157 — Joint torques
159

EP 3 880 413 B1

EP 3 880 413 B1

FIG.2A

FIG.2B

FIG.3

FIG.4

EP 3 880 413 B1

FIG.5A

FIG.5B

FIG.5C

Time[s]

FIG.6A

FIG.6B

FIG.6C

FIG.6D

FIG.6F

EP 3 880 413 B1

FIG.7A

EP 3 880 413 B1

FIG.7B

EP 3 880 413 B1

# FIG.8

Specify initial
and final
positions of
robot, constraints
on limits of state
and controls, and
cost function to
be minimized
**810**

Specify locations
of obstacles that
the robot must
avoid.
**815**

Specify the
multi-link
dynamic model
(MLDM).
**820**

Discretize the dynamics of the
MLDM using an integration
method to obtain a set of
nonlinear equations describing
the trajectory of the robot.
**825**

For each obstacle,
circumscribe the obstacle
using a sphere of
appropriate radius.
**830**

Introduce additional
variables to denote the
trajectory of the end points
of the robot or links of the
robot over time.
**831**

Introduce additional
algebraic constraints to
relate the end-points of the
robot or the links of the
robot to the variables in
the discretized MLDM.
**832**

Generate the geometric
constraints for each
obstacle and the link.
**835**

Solve the nonlinear
optimization program
resulting from the
discretization of MLDM,
additional algebraic
constraints for end-
points and the geometric
constraints.
**840**

Return motion
trajectory
**845**

**801**

EP 3 880 413 B1

**FIG.9A**

Receive inputs - sensor data, vehicle operation & dynamics (VOD) data, a vehicle dynamic model and a nonlinear optimization (NOP) program

915

900

Determine trajectories including a path with a starting and ending locations over time intervals satisfying dynamic and geometric constraints on the vehicle

920

Determining dynamic constraints based on dynamics of each section, each section dynamics include different masses, geometry & moment of inertia tensor via the vehicle dynamic model

925

Determine geometric constraints as a first-order differentiable function by generating a coordinate grid of an environment via sensor data, to determine Cartesian coordinates of an obstacle and end-points of each section

930

Use MLDM to formulate NOP for vehicle, the NOP uses as inputs the starting & ending locations, the dynamic & geometric constraints, to optimize objective function of the trajectories while satisfying the dynamic & geometric constraints and operating constraints, for each time interval in sequence of time intervals

935

**FIG.9B**

Discretize the dynamics of the VOD using an integration method (such as explicit Euler, implicit Euler etc.) to obtain a set of nonlinear algebraic constraints describing the evolution over time of the vehicle — 931

Include additional algebraic constraints modeling the position of the ends of vehicle such that the set of convex combination of the end points circumscribes the vehicle — 932

Circumscribe the obstacles using a sphere. — 933

Impose the geometric constraints that require that the minimum distance between the convex combination of the end points of the robot arms and the obstacles is larger than the radius of the sphere. — 934

Solve the nonlinear optimization program (NOP) consisting of the discretize dynamics of the VOD, algebraic constraints modeling the position of the ends of each of the link-arms, the geometric constraints, bounds on the robotic actuators. — 936

EP 3 880 413 B1

# FIG.10A

EP 3 880 413 B1

FIG.10B

EP 3 880 413 B1

FIG.11

FIG.12

1201

1240 — Solve the nonlinear optimization program resulting from the discretization of VOD, additional algebraic constraints for end-points and the geometric constraints.

1245 — Return motion trajectory

1230 — For each obstacle, circumscribe the obstacle using a sphere of appropriate radius.

1231 — Introduce additional variables to denote the trajectory of the end points of the vehicle.

1232 — Introduce additional algebraic constraints to relate the end-points of the vehicle or the links of the robot to the variables in the discretized VOD.

1235 — Generate the geometric constraints for each obstacle and the vehicle.

1210 — Specify initial and final positions of vehicle, constraints on limits of state and controls, and cost function to be minimized

1215 — Specify locations of obstacles that the vehicle must avoid.

1220 — Specify the vehicle operation dynamic (VOD).

1225 — Discretize the dynamics of the VOD using an integration method to obtain a set of nonlinear equations describing the trajectory of the vehicle.

FIG.13

2D car trajectory

EP 3 880 413 B1

FIG.14A

Control Trajectories

FIG.14B

FIG.15A

EP 3 880 413 B1

**FIG.15B**

## FIG.16A

EP 3 880 413 B1

FIG.16C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6216058 B

- US 7248952 B

**Non-patent literature cited in the description**

- **V. PERDEREAU et al.** Real-time control of redundant robotic manipulators for mobile obstacle avoidance. *Robotics and Autonomous Systems,* 31 October 2002, vol. 41 (1), 41-59
- Optimization-Based Collision Avoidance. **X ZHANG et al.** ARXIV.ORG. Cornell University Library, 09 November 2017

- **F. FACCHINEI ; J.-S. PANG.** Finite-Dimensional Variational Inequalities and Complementarity Problems. Springer, 2003, vol. II
- **FACCHINEI ; J.-S. PANG.** Finite-Dimensional Variational Inequalities and Complementarity Problems. Springer, 2003, vol. II